(19) Europäisches Patentamt
European Patent Office
Office européen des brevets

(11) **EP 1 365 545 A1**

(12) **EUROPEAN PATENT APPLICATION**

(43) Date of publication:
26.11.2003 Bulletin 2003/48

(51) Int Cl.⁷: $H04L\ 12/56$, $H04L\ 12/24$

(21) Application number: 02011456.7

(22) Date of filing: 24.05.2002

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (71) Applicant: **SIEMENS AKTIENGESELLSCHAFT**<br>**80333 München (DE)**<br><br>(72) Inventor: **De Vega Rodrigo, Miguel**<br>**81737 München (DE)** |

(54) **Method and system for modelling elastic network traffic**

(57)     Method for modelling traffic within a shared transmission network comprising an aggregation link for transmitting trafic to a number of access links and an access link for transmitting traffic via different active connections to a client, said method comprising the step of determining a delay of the traffic due to the sharing of the access link among the different active connections.

The method is useful for providing quality of service (QoS) guarantees in communication networks, such as an ATM network or a TCP/IP network. The method facilitates the dimensioning of network links, admission control, congestion control, and load balancing. The method emerges from the fusion of the M/G/R-PS and the M/G/1-PS processor sharing models.

FIG 26

Input Parameter Set of the Current Traffic Class

Initial C, $r_{peak}$, $\lambda$, $\mu$, N, Delay Requirement

Next Traffic Class

Novel PS Model

Increment Capacity

Delay Requirement fullfilled?

No

Yes

The Link Capacity Ci for the Traffic Class i is Dimensioned

No — Last Traffic Class?

Yes

$C = \sum_i C_i$

The Link Capacity C is Dimensioned

**Description**

BACKGROUND OF THE INVENTION

TECHNICAL FIELD

The invention is related to traffic within a shared transmission network.

DESCRIPTION OF THE RELATED ART

Nowadays the importance of providing quality of service (QoS) guarantees in communication networks, such as an ATM network or a TCP/IP network, is becoming obvious as the number of applications that demand it increases. Depending on the QoS requirements, a categorisation between two distinct classes of traffic, elastic and stream traffic, has been generally accepted like for example in L. Massoulié and J.W. Roberts: "Bandwidth sharing and admission control for elastic traffic", Telecommunication Systems, 15:185-201, 2000.

Stream traffic refers to flows with an intrinsic duration and rate (it can be variable) of which time integrity must be (more or less) preserved by the network (e.g. telephone, videoconferencing). On the other hand, elastic traffic alludes to digital objects or "documents" which must be transferred through the network. The flow rate adapts to the time-varying available bandwidth over a communications link using a feedback control scheme. Examples of such schemes are the Transmission Control Protocol (TCP) over the Internet, or an Available Bit Rate (ABR) transfer capability in Asynchronous Transfer Mode (ATM) networks.

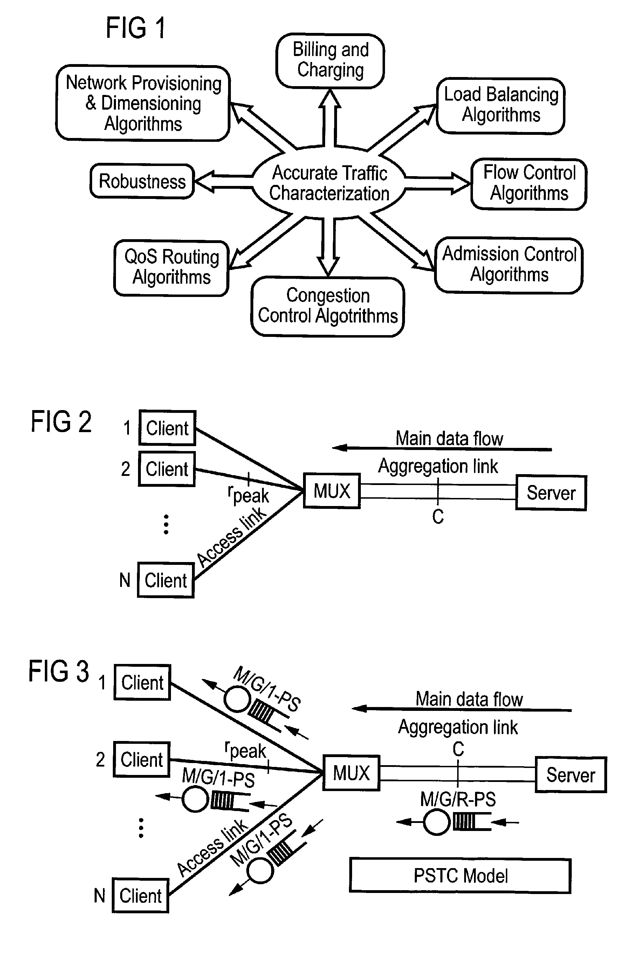

This invention focuses on the problem of characterising elastic traffic. The relevance of this problem comes from the fact that from an accurate traffic characterisation, a variety of important problems can be addressed (see figure 1). Among them, one of the most remarkable ones is the problem of dimensioning bandwidth for elastic-data applications, which can be viewed as a variation of the well-known "capacity assignment problem" described in the literature on design of computer networks. Other useful applications of the traffic characterisation problem are for instance the design of admission control methods and load balancing methods as figure 1 exemplifies.

The networks' traffic characteristics at the packet level (for example for IP networks see A. Feldman, A. Gilbert, P. Huand, and W. Willinger: "Dynamics of IP traffic: a study of the role of variability and the impact of control", Proceedings of ACM SIGCOMM'99, 1999) are extremely complex and unpredictable. For this reason, the traffic characterisation problem rather demands an analysis at the level of the documents or files transferred by the underlying applications (e.g. Web page, FTP file, e-mail). This allows us to keep the network sizing simple (complexity details are hidden) and valid for a wider number of applications and network configurations.

According to this philosophy, the Processor Sharing Model (PS), disclosed in L. Massoulié and J.W. Roberts: "Bandwidth sharing and admission control for elastic traffic", Telecommunication Systems, 15:185-201, 2000; A. Riedl, M. Perske, T. Bauschert and A. Probst: "Dimensioning of IP access networks with elastic traffic", Proceedings of Networks 2000; K. Lindberger: "Balancing quality of service, pricing and utilisation in multiservice networks with stream and elastic traffic", Proceedings of ITC 16; J. Charzinski: "Fun factor dimensioning for elastic traffic", Proceedings, ITC Specialist Seminar on Internet Traffic Measurement, Modeling and Management, Monterey, CA, USA, 18.-20. Sep. 2000, attempts to capture the main characteristics of the network.

The Processor Sharing (PS) models present a simple and effective way of describing the traffic behaviour of several simultaneous elastic connections running over one link. The idea behind these models is to interpret the link as a PS system, which shares its service (i.e. its capacity) equally among several customers. A customer is interpreted as a file transmission, where the file can be for example a document, an object belonging to a web page or an e-mail. This represents an analogy to the mechanisms that adapt elastic traffic to the time-varying available capacity, sharing it equally among all active elastic connections (see D. P. Heyman, T.V. Lakshman and A.L. Neidhardt: "New method for analyzing feedback protocols with applications to engineering Web traffic over the Internet", Proceedings of ACM SIGMETRICS'97. 1997, for example). The sharing of the capacity among different TCP connections is generally not exactly fair, due to the fact that the reaction speed of TCP's congestion control mechanism in a real network is not infinite. In the case of TCP the congestion control mechanism is responsible for adapting the traffic to the channel characteristics. The analogy suggests the suitability of the PS models to accurately describe the characteristics of elastic traffic. In F. P. Kelly, A. K. Maulloo and D. K. H. Tan: "Rate control for communication networks: shadow prices, proportional fairness and stability", in: "Journal of the Operational Research Society 49", 237-252, 1998, Kelly, Maulloo and Tan confirm this with the help of packet-level simulations in a detailed study on the statistical bandwidth sharing performance of TCP.

L. Massoulié and J.W. Roberts: "Bandwidth sharing and admission control for elastic traffic", Telecommunication Systems, 15:185-201, 2000 based on Web site measurements reported in M. F. Arlitt and C. Williamson: "Web server workload characterization: the search for invariants", Proceedings ACM SIGMETRICS'96, pp.126-137, 1996, propose the M/G/1-PS model arguing that the Poisson arrival assumption is more appropriate than others when the considered link receives traffic from a very large population of users (see also M. Nabe, M. Murata and H. Miyahara: "Analysis and modeling of World Wide Web traffic for capacity dimensioning of Internet access lines", International journal Performance Evaluation 34, 249-271, 1998). The M/G/1-PS model has been given a great relevance in the literature due to its mathematical tractability, see A. P. Zwart and O. J. Boxma: "Sojourn time asymptotics in the M/G/1 processor sharing queue", http://citeseer.nj.nec.com/zwart98sojourn.html and S. F. Yashkov: "A derivation of response time distribution for a M/G/1 processor-sharing queue", Problems of Control and Information Theory 12, 133-148, 1983, and its applications to traffic engineering in L. Massoulié and J.W. Roberts: "Bandwidth sharing and admission control for elastic traffic", Telecommunication Systems, 15:185-201, 2000; M. Nabe, M. Murata and H. Miyahara: "Analysis and modeling of World Wide Web traffic for capacity dimensioning of Internet access lines", International journal Performance Evaluation 34, 249-271, 1998; J.W. Roberts: "Engineering for quality of service", Self-Similar Network Traffic and Performance Evaluation, Wiley Inter-Science, March 2000; V. P. Kumar, T. V. Lakshman, and D. Stiliadis: "Beyond best effort: router architectures for differentiated services of tomorrow's Internet. IEEE Commun. Mag., 36(5):152-164, May 1998; A. Kumar, K. V. S. Hari, R. Shobhanjali and S. Sharma: "Long range dependence in the aggregate flow of TCP controlled elastic sessions: an investigation via the processor sharing model", Proceedings of NCC 2000, New Delhi, January 2000. The relevance of this model for elastic traffic dimensioning relies on the fact that it is simple (i.e. it avoids protocol details and complexity) and provides end-to-end delay as QoS parameter. This is very convenient because most of the applications that require different QoS can be roughly classified based on their delay requirements.

K. Lindberger: "Balancing quality of service, pricing and utilisation in multiservice networks with stream and elastic traffic", Proceedings of ITC 16, presents the M/G/R-PS model, a generalisation of the M/G/1-PS model, in which a user has access to a capacity usually smaller than that of the aggregation link. Since this is generally the case in tree-like networks (see figure 2), the M/G/R-PS model is especially adequate for dimensioning elastic traffic in access networks without admission control and making use of the delay as the main QoS parameter. In addition, the model can also be used in the core network. In A. Riedl, M. Perske, T. Bauschert and A. Probst: "Dimensioning of IP access networks with elastic traffic", Proceedings of Networks 2000, and J. Charzinski: "Fun factor dimensioning for elastic traffic", Proceedings, ITC Specialist Seminar on Internet Traffic Measurement, Modeling and Management, Monterey, CA, USA, 18.-20. Sep. 2000, validations of this model through simulations are presented.

As mentioned, the M/G/R-PS model is a generalisation of the M/G/1-PS model, in which a user does not necessarily have access to the whole capacity of the aggregation link C, since he/she is restricted by the capacity of his/her own access link $r_{peak}$ (it is assumed that $r_{peak} \leq C$, and if $r_{peak} = C$ the M/G/R-PS model reduces to the M/G/1-PS model).

Figure 2 proposes a graphical interpretation of the M/G/R-PS model which resembles the typical tree-like structure of a TCP client-server architecture (to follow TCP's notation, the users are referred to as clients). In this figure N clients (or N networks of clients) send file requests to the server (or network of servers) which deliver them first, through an aggregation link of capacity C, and then through an access link of capacity $r_{peak}$. In analogy with a TCP network where clients download files (or objects) from one or several servers, the main data flow arrow has been drawn from server to client. Every file request represents a TCP connection, and in order to be more realistic, it is assumed that a certain client (or network of clients) can run in parallel several TCP connections through a single access link. In what follows, the M/G/R-PS model characteristics and parameters will be introduced directly according to its application for dimensioning TCP networks, and therefore the strict queuing theory semantics will be abandoned for the sake of simplicity.

The M/G/R-PS model is a characterisation for elastic traffic. This traffic characterisation captures one of the most important traffic characteristics, which is the end-to-end delay of a file transmission. The model gives an expression for this delay, in particular for the mean sojourn time $E\{T(x)\}$ as a function of the file size x, according to equation 1 (for a derivation see K. Lindberger: "Balancing quality of service, pricing and utilisation in multiservice networks with stream and elastic traffic", Proceedings of ITC 16). The sojourn time is the time elapsed from sending a file request until the last bit of the file has arrived. A file can be for instance a document, an object belonging to a web page or an e-mail.

$$E\{T(x)\} = \frac{x}{r_{peak}} \cdot \left(1 + \frac{E_2\left(R, R \cdot \rho_{aggregation\ link}\right)}{R \cdot (1 - \rho_{aggregation\ link})}\right) = \frac{x}{r_{peak}} \cdot f_R \qquad (1)$$

where

$$\rho_{aggregation\ link} = \frac{N \cdot \lambda \cdot \mu}{C}; \qquad R = Int\left[\frac{C}{r_{peak}}\right]$$

$\lambda$ is the *average file request arrival time* assumed to be Poisson, see L. Massoulié and J.W. Roberts: "Bandwidth sharing and admission control for elastic traffic", Telecommunication Systems, 15:185-201, 2000; M. Nabe, M. Murata and H. Miyahara: "Analysis and modeling of World Wide Web traffic for capacity dimensioning of Internet access lines", *International journal* Performance Evaluation 34, 249-271, 1998, and $\mu$ is the average file size which will be for our purposes heavy-tailed distributed (see e.g. Mark E. Crovella and Azer Bestavros: "Self-similarity in World Wide Web traffic: evidence and possible causes", IEEE/ACM Transactions on Networking vol. 5, number 6, pages 835-846, December 1997, for evidence that supports this decision). Heavy-tailed distributions are normally difficult to handle because most of them have infinite variance, reflecting the extremely high variability that they capture. However, due to the fact that the average sojourn time of the M/G/R-PS model depends on the file size distribution only through its mean, it is easy to incorporate them to this model. The utilisation factor of the aggregation link $\rho_{aggregation\ link}$ represents a statistical measure of how full this link is ($0 \le \rho_{aggregation\ link} < 1$). The parameter $R$ symbolises the integer part of the ratio between the aggregation link and the access link's capacities. A model extension for arbitrary link rates (i.e. $R$ being any positive real number greater than 1) is proposed in J. Charzinski: "Fun factor dimensioning for elastic traffic", Proceedings, ITC Specialist Seminar on Internet Traffic Measurement, Modeling and Management, Monterey, CA, USA, 18.-20. Sep. 2000. $E_2$ represents the Erlang C formula with $A = R\ \rho_{aggregation\ link}$ (K. Lindberger: "Balancing quality of service, pricing and utilisation in multiservice networks with stream and elastic traffic", Proceedings of ITC 16):

$$E_2(R, A) = \frac{\dfrac{A^R}{R!} \cdot \dfrac{R}{R-A}}{\displaystyle\sum_{i=0}^{R-1} \dfrac{A^i}{i!} + \dfrac{A^R}{R!} \cdot \dfrac{R}{R-A}} \qquad\qquad (2)$$

The factor $f_R$ is called the delay factor (introduced in K. Lindberger: "Balancing quality of service, pricing and utilisation in multiservice networks with stream and elastic traffic", Proceedings of ITC 16, further explanations in A. Riedl, M. Perske, T. Bauschert and A. Probst: "Dimensioning of IP access networks with elastic traffic", Proceedings of Networks 2000) as it denotes the increase on the average file transfer time caused by the sharing of the capacity of the aggregation link among the active TCP connections. This additional delay is represented in figure 2 by the M/G/R-PS queue (do not misinterpret it with a FIFO queue). In principle the delay factor is a quantitative measure of how aggregation link congestion affects the average sojourn time.

It can be shown in Opnet simulations that the standard M/G/R-PS model described in K. Lindberger: "Balancing quality of service, pricing and utilisation in multiservice networks with stream and elastic traffic", Proceedings of ITC 16, has a major drawback: It fails to model most real networks, since it is not accurate when the average load in the access link is above 5%.

It is therefore an object of the present invention to overcome this drawback.

It is another object of the present invention to provide an improved method and system for modelling traffic within a network.

It is yet another object of the present invention to provide an improved method and system for determining sojourn times, determining a capacity $C$ of an aggregation link, determining a number of clients N, determining a capacity $r_{peak}$ of an access link, determining an average throughput of a shared transmission network, determining admission control to a network, modelling congestion control in a network, and modelling load balancing.

## SUMMARY OF THE INVENTION

The foregoing objects are achieved by the inventions described in the independent claims. Preferred embodiments are disclosed in the dependent claims.

A shared transmission network comprises an aggregation link for transmitting traffic to a number of access links and one or more of these access links for transmitting traffic via different active connections to a client. The active connections can be real or virtual transmission units provided by the use of the access link. The client can be a person, another network, or any other institution which receives data. The access link is connected with the aggregation link in order to allow traffic in the form of data to be delivered over the network.

A method for modelling traffic within the shared transmission network comprises the steps of:

determining a delay of the traffic due to the transmission of the traffic through the aggregation link;

determining a delay of the traffic due to the transmission of the traffic through the access link comprising the step of determining a delay of the traffic due to the sharing of the access link among the different active connections; and

determining a combined delay of the traffic by combining the delay of the traffic due to the transmission in the aggregation link and the delay of the traffic due to the transmission of the traffic through the access link.

Simulations and experiments show, that this method matches accurately the average trend of the combined delay in a network. The reason is that the method also takes into account the additional delays that traffic packets experience due to the sharing of the access link capacity.

In preferred embodiments of the invention, the step of determining the delay of the traffic due to the transmission in the aggregation link comprises the step of determining the delay taking into account the capacity $C$ of the aggregation link, the capacity $r_{peak}$ of the access link, the number of clients $N$ sending file requests over the network, the average file request arrival time $\lambda$, and/or the average file size $\mu$.

In other preferred embodiments of the invention, the delay of the traffic due to the transmission in the aggregation link is expressed in terms of a mean sojourn time $E_{ag}\{T(x)\}$ for the aggregation link. Accordingly, the step of determining the delay of the traffic due to the transmission in the aggregation link comprises the step of determining a mean sojourn time $E_{ag}\{T(x)\}$ for the aggregation link.

In further preferred embodiments of the invention, the step of determining the delay of the traffic due to the transmission in the aggregation link comprises the step of determining a mean sojourn time $E_{ag}\{T(x)\}$ for a given file size $x$ in the aggregation link according to

$$E_{ag}\{T(x)\} = \frac{x}{r_{peak}} \cdot \left( \frac{E_2\left(R, R \cdot \rho_{aggregation\ link}\right)}{R \cdot (1 - \rho_{aggregation\ link})} \right)$$

where

$$\rho_{aggregation\ link} = \frac{N \cdot \lambda \cdot \mu}{C}; \qquad R = Int\left[\frac{C}{r_{peak}}\right];$$

and

$$E_2(R, A) = \frac{\dfrac{A^R}{R!} \cdot \dfrac{R}{R - A}}{\displaystyle\sum_{i=0}^{R-1} \frac{A^i}{i!} + \frac{A^R}{R!} \cdot \frac{R}{R - A}}.$$

Advantageously, the step of determining a delay of the traffic due to the sharing of the access link among the different active connections comprises the step of determining of the delay taking into account the capacity $C$ of the aggregation link, the capacity $r_{peak}$ of the access link, the average file request arrival time $\lambda$, and/or the average file size $\mu$.

With further advantage, the delay of the traffic due to the sharing of the access link among the different active connections is expressed by means of a mean sojourn time $E_{acsh}\{W(x)\}$ for a given file size $x$ due to the sharing of the access link among the different active connections. Accordingly, the step of determining a delay of the traffic due to the sharing of the access link among the different active connections comprises the step of determining the mean sojourn time $E_{acsh}\{W(x)\}$ for a given file size $x$ due to the sharing of the access link among the different active connections.

With even further advantage, the said step of determining a delay of the traffic due to the sharing of the access link among the different active connections comprises the step of determining a mean sojourn time $E_{acsh}\{W(x)\}$ for a given file size x due to the sharing of the access link among the different active connections according to

$$E_{acsh}\{W(x)\}=\frac{x}{r_{peak}}+\frac{x}{r_{peak}}\cdot\frac{\rho_{access\ link}}{1-\rho_{access\ link}}$$

where

$$\rho_{access\ link}=\frac{\lambda\mu}{r_{peak}}.$$

It is preferred, if the step determining a combined delay of the traffic comprises the step of determining a total mean sojourn time $E\{T(x)\}|_{PTSC}$ for a given file size x according to

$$E\{T(x)\}|_{PSTC}=\frac{x}{r_{peak}}\cdot f'_{R}$$

where

$$f'_{R}=\frac{E_{2}\left(R,R*\rho_{aggregation\ link}\right)}{R(1-\rho_{aggregation\ link})}+\frac{1}{1-\rho_{access\ link}}\ ;$$

$$\rho_{aggregation\ link}=\frac{N\lambda\mu}{C};\qquad\rho_{access\ link}=\frac{\lambda\mu}{r_{peak}};\qquad R=Int\left[\frac{C}{r_{peak}}\right];$$

and

$$E_{2}(R,A)=\frac{\dfrac{A^{R}}{R!}\cdot\dfrac{R}{R-A}}{\displaystyle\sum_{i=0}^{R-1}\dfrac{A^{i}}{i!}+\dfrac{A^{R}}{R!}\cdot\dfrac{R}{R-A}}\ .$$

The connection to the previous preferred modes of the invention is given by the equation:

$$E\{T(x)\}\big|_{PSTC} = E_{ag}\{T(x)\} + E_{actr}\{T(x)\} + E_{acsh}\{W(x)\} = \frac{x}{r_{peak}} \cdot f'_R$$

The three parts of delay can be understood looking at the three parts of the delay factor

$$f'_R = \frac{E_2\left(R, R * \rho_{aggregation\ link}\right)}{R(1 - \rho_{aggregation\ link})} + \frac{1}{1 - \rho_{access\ link}} = 1 + \frac{E_2\left(R, R * \rho_{aggregation\ link}\right)}{R(1 - \rho_{aggregation\ link})} + \frac{\rho_{access\ link}}{1 - \rho_{access\ link}}$$

which can be interpreted as follows:

- The term "1" of $f'_R$ is the delay due to the transmission of x bits through an access link of capacity $r_{peak}$;

- The term

$$\frac{E_2\left(R, R * \rho_{aggregation\ link}\right)}{R(1 - \rho_{aggregation\ link})}$$

of $f'_R$ is the delay due to the sharing of the aggregation link capacity among the different active connections; and

- The term

$$\frac{\rho_{access\ link}}{1 - \rho_{access\ link}}$$

of $f'_R$ is the delay due to the sharing of the access link capacity among the different active connections.

While the described method for modelling traffic within a shared transmission network is advantageous and useful by itself, its use can even be improved by using this method as a part of different other methods as will be described in the following paragraphs.

These methods comprise:

Dimensioning Methods

A method that dimensions the capacity of an aggregation link *C* for a given number *N* of users connected through an access link of capacity $r_{peak}$ and demanding a traffic of *b* bps. The capacity *C* is dimensioned, so that all file transmissions experience a given average average end-to-end delay.
A method like described in the previous paragraph, wherein instead of dimensioning the capacity *C* of the aggregation link, this value is given and the number *N* of users is determined.
Another method wherein instead of dimensioning the capacity *C* of the aggregation link, this value is given and the capacity $r_{peak}$ of the access link is determined.
Yet another method, wherein instead of dimensioning the capacity of the aggregation link *C*, this value is given and the offered traffic *b* is determined.
Another method, wherein instead of dimensioning the capacity of the aggregation link *C*, this value is given and the average end-to-end delay is determined.
Another method, wherein instead of dimensioning the capacity *C* of the aggregation link, this value is given and the average throughput is determined.

Admission Control Methods

A method for admission control, wherein an incoming flow is admitted if and only if the average end-to-end delay requirement according to the method for modelling traffic described above is observed.

A method for admission control, wherein instead of accepting or rejecting a new flow if and only if the average end-to-end delay requirement is fulfilled, it is done depending on whether the average throughput is observed.

Congestion Control Methods

A method for congestion control, wherein the method for modelling traffic as described above is used in order to determine as a function of the end-to-end delay when a link is congested, and how many elastic flows should be discarded in order to eliminate congestion.

A method for congestion control, wherein instead of using the end-to-end delay criteria for determining when a link is congested and how many elastic flows should be discarded in order to eliminate congestion, it is done depending on the average throughput criteria.

Load Balancing Methods

A method for load balancing based on the method for modelling traffic as described above.

A method for load balancing based on the method for modelling traffic as described above.

System

A system for modelling traffic within a shared transmission network, the network comprising an aggregation link for transmitting traffic to a number of access links and an access link for transmitting traffic via different active connections to a client, the access link being connected with the aggregation link, comprises:

means for determining a delay of the traffic due to the transmission of the traffic through the aggregation link;

means for determining a delay of the traffic due to the transmission of the traffic through the access link comprising the step of determining a delay of the traffic due to the sharing of the access link among the different active connections; and

means for determining a combined delay of the traffic by combining the delay of the traffic due to the transmission in the aggregation link and the delay of the traffic due to the transmission of the traffic through the access link.

Upon reference to the foregoing, those skilled in the art will understand how to combine advantageous features and embodiments of the methods described above to yield improved systems for modelling traffic within a shared transmission network.

The methods and systems of the present invention can be utilised to model traffic within a shared transmission medium, such as an ATM or TCP network, so that customer expectations can be met and the network can be constructed and utilised efficiently.

The above as well as additional objects, features, and advantages of the present invention will become apparent in the following detailed written description.

BRIEF DESCRIPTION OF THE DRAWINGS

Figure 1: Example of the practical applications of an accurate traffic characterisation;

Figure 2: Graphical interpretation of the M/G/R-PS model;

Figure 3: Graphical interpretation of the novel processor sharing traffic characterisation;

Figure 4: a) Basic simulation scenario, b) TCP model features implemented in Opnet;

Figure 5: Comparison of the average sojourn time vs. file size among the simulation results, the standard M/G/R-PS predictions, and the PSTC predictions (extended M/G/R-PS model in the figure) for different loads in the access link, the table below shows the specific configuration parameters of each scenario;

Figure 6: Hierarchical structure of a typical GPRS/UMTS network;

Figure 7: Example of a tree-like network that can be dimensioned with the M/G/R-PS model;

Figure 8: Aggregation Link Capacity Dimensioning Method based on the average end-to-end delay requirement;

Figure 9: Aggregation Link Capacity Dimensioning Method based on the average throughput requirement;

Figure 10: Typical location of the admission control algorithm in a real network;

Figure 11: Analogy between the admission control scenario and the processor sharing model;

Figure 12: Scheme of the admission control algorithm, the value n represents the number of active flows registered in the link;

Figure 13: Typical location of the congestion control algorithm in a real network;

Figure 14: Analogy between the congestion control scenario and the processor sharing model;

Figure 15: Congestion Detection Method;

Figure 16: Load balancing scenario;

Figure 17: The processor sharing model must be applied to a network scenario similar to the one shown in the figure;

Figure 18: Equivalence between M-overlapping processor sharing models and the load balancing scenario;

Figure 19: Process for modelling the load balancing scenario with the M-overlapping processor sharing models;

Figure 20: Load distribution algorithm, part 1;

Figure 21: Load distribution algorithm, part 2;

Figure 22: Load balancing algorithm;

Figure 23: Example of an access network;

Figure 24: The processor sharing model must be applied only to the bottleneck, this figure is equivalent to figure 25;

Figure 25: Hierarchical structure of a typical GPRS/UMTS network;

Figure 26: Dimensioning example with several traffic classes;

Figure 27: Load balancing scenario for the uplink case; and

Figure 28: Equivalence between M-overlapping processor sharing models and the load balancing scenario for the uplink case.

DETAILED DESCRIPTION

In a novel Processor Sharing Traffic Characterisation (PSTC) a novel traffic characterisation with a PS model is introduced and exemplified in a link's capacity dimensioning method. This method emerges from the fusion of the M/G/R-PS and the M/G/1-PS models. In addition it can be easily modified and used for defining other methods (like the admission control or load balancing ones) described below. The accuracy and validity of these other methods depends directly on the accuracy and validity of the Link Dimensioning Method, since they basically derive from it.

Although the PSTC model is described generally for TCP/IP traffic, the same principles can be extended to any kind of *elastic* traffic (for instance see J.W. Roberts: "Engineering for quality of service", Self-Similar Network Traffic and Performance Evaluation, Wiley Inter-Science, March 2000), such as ABR traffic in ATM networks. Therefore, the PSTC model is valid for any kind of elastic traffic.

As shown in D. P. Heyman, T.V. Lakshman and A.L. Neidhardt: "New method for analyzing feedback protocols with applications to engineering Web traffic over the Internet", Proceedings of ACM SIGMETRICS'97, 1997, it is generally known that TCP behaves in a greedy way, in the sense that it always tries to reach the maximum capacity of a link. When the reaction speed of TCP is limited (the acknowledgements are not received instantaneously at the server whenever a file is sent), a TCP server does not detect congestion fast enough, and does not reduce the transfer rate in time. As a consequence, the server sends more packets than the congested link can cope with, causing additional delays mainly due to buffering of the non-fitting packets (sharing delays) and possible retransmissions. The term additional delay is used to remark the fact that this delay adds to the normal transfer delay $x/c$ when $x$ bits are transmitted through a channel of capacity $c$. When the link is not highly loaded retransmissions do not play an important role in defining the traffic characteristics. In this case the standard M/G/R-PS model successfully takes into account the majority of these additional delays in the aggregation link, but not in the access link. In fact, the model assumes that the traffic offered to the access link will never exceed its capacity, and that therefore no *additional delays* due to the sharing of this capacity will appear. Since this assumption does not apply to real TCP connections in the access link, the standard M/G/R-PS model fails to predict the expected sojourn time if the average load in the access link is above 5%.

Another way of understanding this limitation is to realise that the M/G/R-PS models the way that different customers (TCP file transmissions) arriving at a system (initiated by the TCP client) share one server's capacity (share the aggregation link) each one with a maximum service capacity limitation (limited by an access link). It is assumed that a customer (TCP file transmission) does not share this limited capacity with others, i.e. it is like if every TCP file transmission had its own access link, which is not the case in reality.

In order to include the additional delay times experienced by the files being transmitted through the access link in the PSTC model, a part of the M/G/1-PS model has been used in combination with the standard M/G/R-PS model according to figure 3 (see figure 1 for a comparison).

The M/G/1-PS model has been chosen for the following reasons (for a description of the used nomenclature see L. Kleinrock: "Queuing systems", Preface of volume 1):

- The file request arrival times in the access link are assumed to be modelled exactly as in the aggregation link (M/G/R-PS model) with a Poisson distribution of mean λ: the queue is M/x/x-x
- The file size distribution in the access link is assumed to be the same as in the aggregation link, i.e. it is general (in our simulation example it is a Pareto distribution) with mean μ: the queue is M/G/x-x
- If a client has only one active TCP connection at a certain moment, it can use the whole capacity of the access link $r_{peak}$: the queue is M/G/1-x
- The available capacity $r_{peak}$ is equally shared among a client active TCP connections, and thus the service discipline is *Processor Sharing:* the link can be modelled with M/G/1-PS

In the M/G/1-PS model, the expected sojourn time (or transfer time) $E\{T(x)\}$ for a file of size $x$ is given by equation 3. A derivation of this equation can be found in *S*. F. Yashkov: "A derivation of response time distribution for a M/G/1 processor-sharing queue", Problems of Control and Information Theory 12, 133-148, 1983, and additional relevant work is presented in A. P. Zwart and O. J. Boxma: "Sojourn time asymptotics in the M/G/1 processor sharing queue", http://citeseer.nj.nec.com/zwart98sojourn.html.

$$E\{T(x)\} = \frac{x}{r_{peak}} \cdot \frac{1}{(1 - \rho_{access\ link})} \tag{3}$$

$$\rho_{access\ link} = \frac{\lambda \cdot \mu}{r_{peak}}$$

However, the PSTC model does not consist of literally adding the M/G/1-PS delay to the M/G/R-PS model. As it will be argued, only a part of the M/G/1-PS's sojourn time should be taken into account. The equation above can be also written as a function of the *average delay time* $E\{W(x)\}$ of a customer entering the system in steady state (see e.g. A. P. Zwart and O. J. Boxma: "Sojourn time asymptotics in the M/G/1 processor sharing queue", http://citeseer.nj.nec.com/zwart98sojourn.html):

$$E\{T(x)\} = \frac{x}{r_{peak}} + E\{W(x)\} = \frac{x}{r_{peak}} + \frac{x}{r_{peak}} \cdot \frac{\rho_{access\ link}}{1 - \rho_{access\ link}} = \quad (4)$$

$$= \frac{x}{r_{peak}} \cdot (1 + s); \qquad where \quad s = \frac{\rho_{accesslinki}}{1 - \rho_{accesslink}}$$

The M/G/1-PS sojourn time can be interpreted according to equation 4 as the addition of two terms:

- Term A: Length of the service request. The interpretation of this term is the delay due to the transmission of a file of size x through a link of speed $r_{peak}$. This delay is $x / r_{peak}$.
- Term B: Average delay time $E\{W(x)\}$. The interpretation of this term is the delay due to the sharing of the capacity resource ($r_{peak}$) among the different active TCP connections. According to equation 4 this delay is $x / r_{peak} *s$.

We are interested in extending the existing M/G/R-PS model. Since this model already takes into account the delay expressed by the term A (see equation 1), only the term B will be incorporated to the model.

The PSTC model can be derived by introducing the effect of the term B into the M/G/R-PS formula (equation 1). That is, expressing a new delay factor $f'_R$ as a function of the old one $f_R$:

$$f'_R = f_R + s = \frac{E_2(R, R \cdot \rho_{aggregation\ link})}{R \cdot (1 - \rho_{aggregation\ link})} + \frac{1}{1 - \rho_{access\ link}} \quad (5)$$

This new delay factor $f'_R$ includes the following effects:

- The delay due to the fact that all TCP connections (from all clients) share the aggregation link capacity (this delay was already taken into account by the standard M/G/R-PS model)
- The delay due to the fact that all the TCP connections belonging to a certain client (a generic one) share the access link capacity

Finally, we can express the sojourn time of the PSTC model as a function of the new delay factor (compare to equation 1):

$$E\{T(x)\}|_{PSTC} = \frac{x}{r_{peak}} \cdot f'_R \quad (6)$$

where,

$$f'_R = \frac{E_2(R, R * \rho_{aggregation\ link})}{R(1 - \rho_{aggregation\ link})} + \frac{1}{1 - \rho_{access\ link}};$$

$$\rho_{aggregation\ link} = \frac{N\lambda\mu}{C}; \qquad \rho_{access\ link} = \frac{\lambda\mu}{r_{peak}}; \qquad R = \frac{C}{r_{peak}}$$

$$\rho_{aggregation\ link} = \frac{N\lambda\mu}{C}; \ \rho_{access\ link} = \frac{\lambda\mu}{r_{peak}}; \ R = \frac{C}{r_{peak}}$$

$\lambda$ is the average file request arrival time assumed to be Poisson, and $\mu$ is the average file size which will be for our dimensioning purposes heavy-tailed distributed. Heavy-tailed distributions are normally difficult to handle because most of them have infinite variance, reflecting the extremely high variability that they capture. However, due to the fact that the average sojourn time of the M/G/R-PS model depends on the file size distribution only through its mean, it is easy to incorporate them to this model. The utilisation factor of the aggregation link $\rho_{aggregation\ link}$ represents a statistical measure of how full this link is ($0 \leq \rho_{aggregation\ link} < 1$). The parameter $R$ symbolises the integer part of the ratio between the aggregation link and the access link's capacities. $E_2$ represents the Erlang C formula with A = $R^*\rho_{aggregation\ link}$ defined in equation 2. The factor $f'_R$ is called the delay factor as it denotes the increase on the average file transfer time caused by the sharing of the capacity of the aggregation link among the active TCP connections. In principle the delay factor is a quantitative measure of how aggregation link congestion affects the average sojourn time.

The three parts of the delay factor

$$f'_R = \frac{E_2\left(R, R * \rho_{aggregation\ link}\right)}{R(1-\rho_{aggregation\ link})} + \frac{1}{1-\rho_{access\ link}} = 1 + \frac{E_2\left(R, R * \rho_{aggregation\ link}\right)}{R(1-\rho_{aggregation\ link})} + \frac{\rho_{access\ link}}{1-\rho_{access\ link}}$$

can be interpreted as follows:

- The term "1" of $f'_R$ is the delay due to the transmission of x bits through an access link of capacity $r_{peak}$;

- The term

$$\frac{E_2\left(R, R * \rho_{aggregation\ link}\right)}{R(1-\rho_{aggregation\ link})}$$

of $f'_R$ is the delay due to the sharing of the aggregation link capacity among the different active connections; and

- The term

$$\frac{\rho_{access\ link}}{1-\rho_{access\ link}}$$

of $f'_R$ is the delay due to the sharing of the access link capacity among the different active connections.

Advantages of the Novel Traffic Characterisation Models

As mentioned above, the advantages of the presented traffic characterisations of the PSTC are directly connected with the quality of the methods mentioned above. These advantages comprise:

- The Link Dimensioning Method successfully dimensions any non-congested realistic network, unlike the existing M/G/R-PS model, which fails for access link loads above 5%.
- The methods are simple and avoid specific network details and complexity (e.g. TCP specific parameter values).
- The methods do not depend strongly on the network configuration and topology, and therefore can be used in a broad range of scenarios.
- The methods use intuitive parameters easy to measure or to find and to simulate.
- Although the methods are novel, they rely on generally accepted and widely proven dimensioning models such as the M/G/R-PS, which provides guarantees as far as their reliability and accuracy are concerned.

Processor Sharing Traffic Characterisation in a Tree-like TCP/IP Network

Simulation scenario

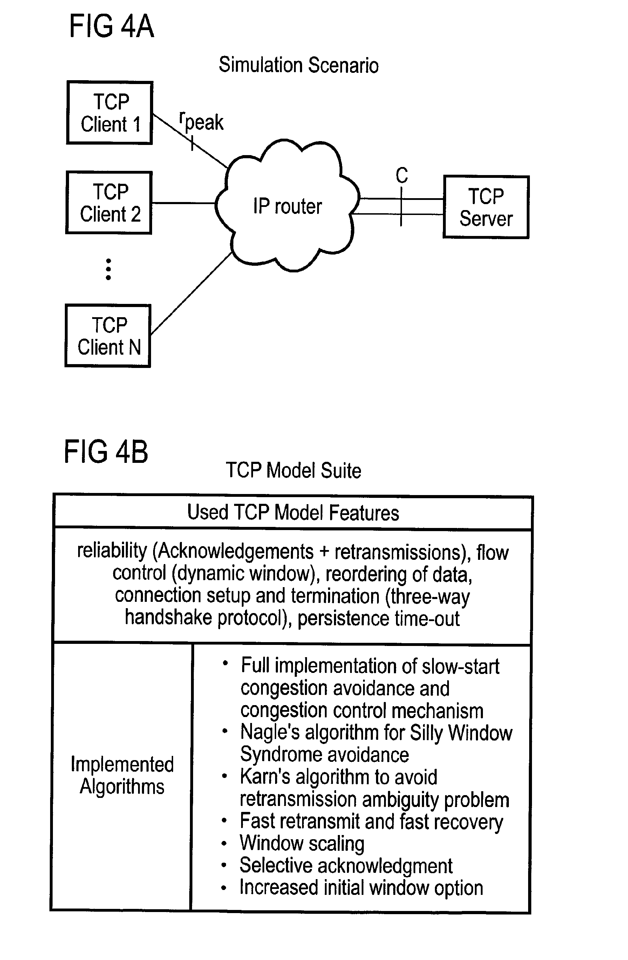

In order to have a useful estimation of the accuracy of the PSTC model, a realistic TCP/IP simulation scenario according to figure 4 was chosen.

According to measurements (see for instance Mark E. Crovella and Azer Bestavros: "Self-similarity in World Wide Web traffic: evidence and possible causes", IEEE/ACM Transactions on Networking vol. 5, number 6, pages 835-846, December 1997), the internet traffic mixture can be described with a self-similar source of Hurst parameter 0.8. To model this source, a Poisson distribution was chosen for the file request arrival time and a Pareto distribution to model the file sizes (see e.g. A. Feldman, A. Gilbert, P. Huand, and W. Willinger: "Dynamics of IP traffic: a study of the role of variability and the impact of control", Proceedings of ACM SIGCOMM'99, 1999 for previous work on generating aggregated Internet-like traffic with Poisson arrivals and Pareto file sizes). In K. Park, G. Kim and M. E. Crovella: "The protocol stack and its modulating effect on self-similar traffic", in: "Self-similar network traffic and performance evaluation", edited by K. Park and W. Willinger, ISBN 0-471-31974-0, is show that the Hurst parameter estimates vary with file size distribution in a roughly linear manner. When the file size is modelled with a Pareto distribution of exponent $\alpha$, the line H = (3 - $\alpha$) / 2 is used as an approximation. According to this, due to the fact that we model a Hurst parameter of 0.8, our Pareto distribution has an exponent $\alpha$ = 1.4.

In order to explore the accuracy of the M/G/R-PS and of the PSTC models under different network configurations, several simulations were made with parameter values ranging from:

- Number of TCP clients varying from $N$ = 3 to 1800
- Access link capacity varying from $r_{peak}$ = 16 Kbps to 2 Mbps
- $R = C / r_{peak}$ varying from 1 to 100
- $\rho_{access\ link}$ and $\rho_{aggregation\ link}$ varying from 0% < $\rho$ < 100 %

The network simulator Opnet was used to simulate the scenario. Opnet is an event-oriented simulator with a detailed TCP/IP implementation. The simulations were made at the network level, assuming that the lower layers provide a reliable service (i.e. no packet loss). All TCP/IP parameters not mentioned in this section were kept as Opnet default values.

The statistics collected were the file size and the file sojourn time (time elapsed between sending a file request to the server until the last bit of the file has arrived to the client). The PSTC validation criteria for characterising TCP/IP traffic is to compare the simulated average sojourn time as a function of the file size to the model predictions.

In M.E. Crovella, L. Lipsky: "Simulations with heavy-tailed workloads", in: "Self-similar network traffic and performance evaluation", edited by K. Park and W. Willinger. ISBN 0-471-31974-0 the number of samples necessary to achieve "highly likely" two-digit accuracy in mean as a function of $\alpha$ is provided for heavy-tailed distributions. According to these authors, a number of $10^7$ samples is needed in order to have a two-digit accuracy in the mean of the sojourn time with $\alpha$ = 1.4. For this reason the length of all our simulations was above this cipher.

<u>Validation of the Processor Sharing Traffic Characterisation</u>

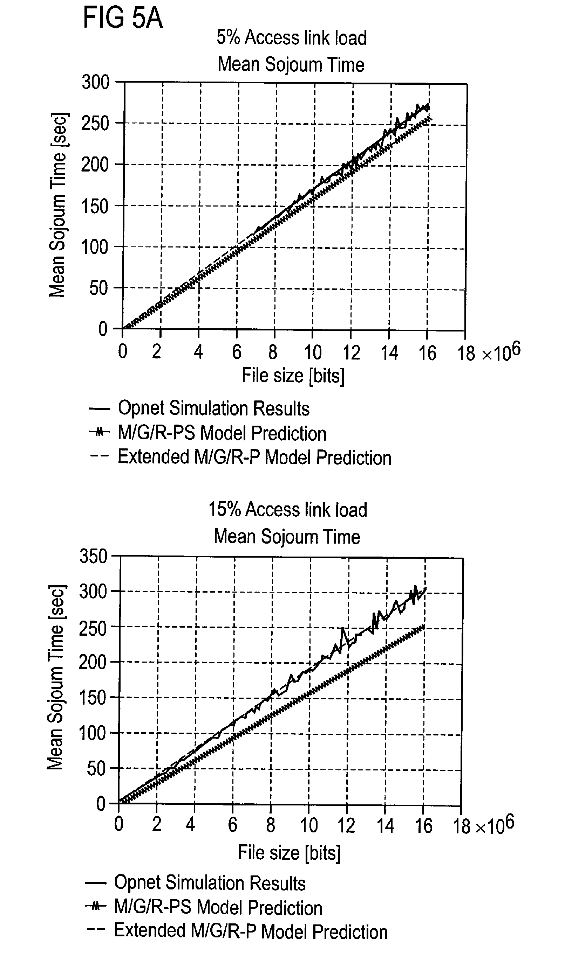

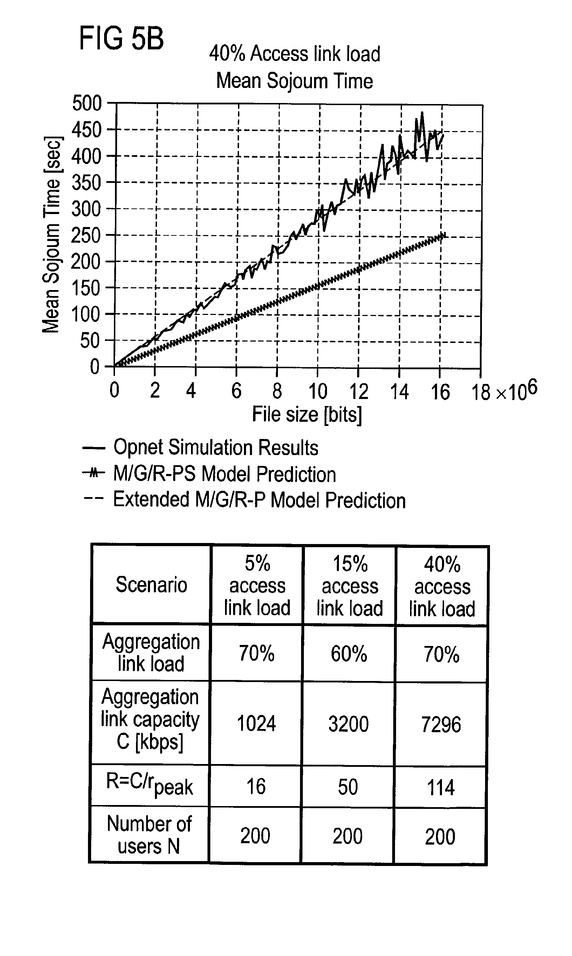

The PSTC model has been tested with different parameter configurations. Figure 5 outlines some of the results obtained.

It can be observed that with a load in the access link so small as 5%, the standard M/G/R-PS model makes already a prediction error, which is noticeable for big files. In particular, for 16Mb files, the prediction error percentage is approximately 10%. This is due to the self-similar nature of the access traffic, which makes the event of huge file transmissions to be plausible even for small link loads. In this case, during the huge file download (it might take minutes) it is probable that one or more additional file downloads from the same TCP client are activated. This causes additional delays due to the sharing of the access link capacity and makes the standard model to fail. The PSTC model prediction is more accurate in this picture, although the difference between both models is small.

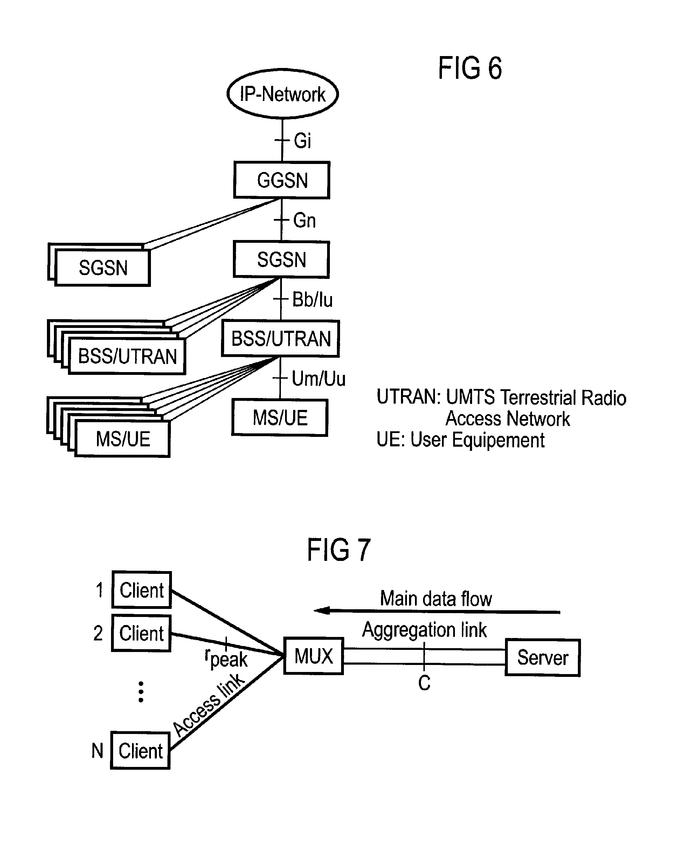

With a load of 15% the prediction error is non-negligible even for small files, and with a load of 40% it is considerably big. In both cases however, the PSTC model (extended M/G/R-PS model in the picture) matches accurately the average trend of the simulated sojourn time. The reason is that the PSTC model takes also into account the additional delays that packets experience due to the sharing of the access link capacity. These delays appear when a TCP connection is obliged to slow down its transfer rate in order to share with other TCP connections the capacity of an access link. To include this mechanism in the processor sharing model reveals to be extremely important. For instance in the 15 % case in figure 7, the prediction error percentage of the standard M/G/R-PS model is around 20%, for a 16Mb file. In the case of 40% access link load, this percentage error rises up to 80% for the same file size. For this case in particular, the standard M/G/R-PS model expects to receive a 16Mb file after 250 seconds approximately (the access link capacity is 64 kbps), while simulations show that the average delay of this file is almost double (around 450 seconds).

Figure 5 shows the average end-to-end delay $E\{T(x)\}$ as a function of the file size x. Let us now consider the average end-to-end delay $E\{T\}$. For the M/G/R-PS model, $E\{T\}$ can be easily determined using basic probability theory leading to $E\{T\} = \mu * f_R / r_{peak}$, where $f_R$ is given by equations 1 or 5 depending on whether the standard or the PSTC model is used. Table 1 shows a comparison of the average delay $E\{T\}$ and the percentage error relative to the simulation results, determined for the scenarios in figure 5:

Table 1:

Average end-to-end delay of the Opnet simulation, the standard, and the PSTC model predictions. For the standard and PSTC models, the percentage error relative to the delay obtained from simulations is shown. Values are given for every load scenario presented in figure 5 (5%, 15% and 40%).

| | Access Link Load | Opnet Simulation | Standard model | PSTC model |
|---|---|---|---|---|
| Average end-to-end delay E{T} (sec*10²) | 5 % | 1.364215 | 1.280220 | 1.366288 |
| | 15 % | 1.522331 | 1.242970 | 1.518237 |
| | 40 % | 2.280631 | 1.242942 | 2.27204 |
| Error (%) relative to simulations | 5 % | | 6.15 | 0.151955 |
| | 15 % | | 18.35 | 0.2689297 |
| | 40 % | | 45.5 | 0.376 |

As can be seen, the average delay prediction of the PSTC model is more accurate than that of the standard model. In particular, the percentage error of the extended model predictions (PSTC) respect to the simulation results is below 1% in all scenarios. The standard M/G/R-PS model, however has a percentage error above 6 % in the 5 % scenario and up to 45.5 % in the 40 % scenario.

Summarising, every graph in figure 5 shows that the prediction error of the standard M/G/R-PS model compared to the simulation results grows linearly with the file size. In addition, according to table 1, it can be observed that the percentage error of the average end-to-end delay $E\{T\}$ of the standard M/G/R-PS model also grows with the average access link load (scenarios 5%, 15 % and 40%). However, the PSTC model follows accurately the average trend of the simulation results in the above mentioned cases, keeping the percentage error of the average end-to-end delay below 1% in all scenarios. Finally, the PSTC model tends to converge to the standard M/G/R-PS model as figure 5 shows, when the average load in the access link is reduced.

Concluding, a validation of the PSTC model for characterising TCP/IP traffic with the network simulator Opnet was made. The fact that a realistic TCP/IP tree-like network was simulated (and not the PSTC model itself) suggests that the results obtained are a reliable source for measuring the accuracy of the model predictions.

The interpretation of the results obtained allows for the following conclusions. The standard M/G/R-PS model successfully models the sharing effects in the aggregation link among all active TCP connections. When the network load is high and retransmissions play an important role in defining the traffic characteristics, the model fails. When the load in the access link is non negligible (above 5%) and the network is not highly loaded, the standard M/G/R-PS model fails again disqualifying it for most realistic applications. It was reasoned that the cause of this failure is the fact that the model does not take into account the delay caused by the sharing of the access link capacity among all active TCP connections.

In this invention, an PSTC model that takes into account the effects of capacity sharing in the access link is presented. Simulation results show that the PSTC model is accurate enough for realistic applications overcoming the problems encountered with the standard M/G/R-PS model. Moreover, simulations show that the PSTC model converges to the standard M/G/R-PS model in the cases where the later is accurate. Therefore we conclude that the PSTC model can substitute the standard M/G/R-PS model, in order to characterise *elastic* traffic.

Dimensioning Methods Based on the Processor Sharing Traffic Characterisation

Given a tree-like network structure like the example presented in figure 6, the link dimensioning problem consists of finding out for every link, the optimal link parameters (e.g. link capacity), so that a certain average end-to-end delay requirement is observed.

The network in figure 6, as well as any other tree-like network with elastic traffic can be modelled with the help of the presented processor sharing model. In particular in figure 6, every hierarchical level can be dimensioned according to the model shown in figure 7.

In this figure $N$ clients (or N networks of clients) send file requests to the server (or network of servers) which deliver them first, through an aggregation link of capacity $C$, and then through an access link of capacity $r_{peak}$. As it can be seen, the tree-like structure matches very well with a typical access network, but this dimensioning problem can also be applied to specific parts in the core network. The problem alludes to any kind of network with *elastic traffic*, like for instance TCP/IP networks like the Internet or like the UMTS radio access network, or ATM (ABR) networks.

Link Dimensioning Method for Elastic Traffic with End to End Delay as Quality of Service Requirement

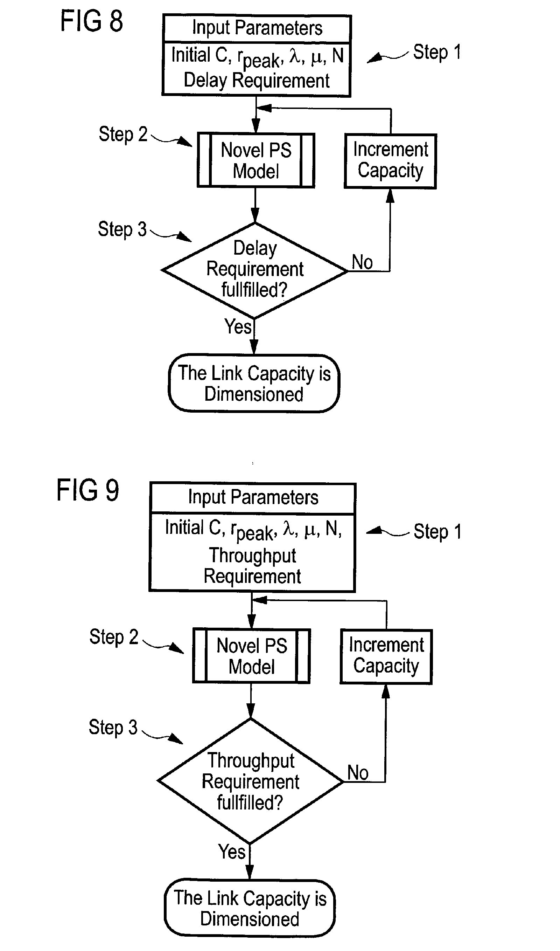

The PS capacity dimensioning procedure is based on equation 6, and consists of an iterative process for finding the minimum capacity C that satisfies a given delay requirement (see figure 8 where this dimensioning procedure is schematically described). The delay requirement is usually expressed by means of the delay factor $f'_R$, which is more convenient than the mean sojourn time $E\{T(x)\}$ due to the fact that it is independent of the file size $x$.

Steps of the method include:

| Step 1 | The input parameters of the model are $r_{peak}$, $\lambda$, $\mu$, $N$, and $f'_R$ (see "PS paper.doc" for a description of the meaning of these parameters), and an initial minimum aggregation link's capacity $C$. |
|---|---|
| Step 2 | The PS model (equation 6) is applied and a certain delay factor $f_{R0}$ is determined |
| Step 3 | The determined delay factor $f_{R0}$ is compared to the delay requirement $f'_R$.<br>- If $f_{R0} > f'_R$ then the average end-to-end delay is still excessive, and in order to reduce it, the aggregation link capacity $C$ has to be incremented. In this case the method jumps to step 2.<br>- If $f_{R0} \leq f'_R$ then the average end-to-end delay fulfils the delay requirements and the process of finding the optimum capacity is finished. |

The next method to be described is similar to the one described before, with the following differences:

- In Step 1, an initial minimum number of users N is given, instead of and an initial minimum aggregation link's capacity C
- In Step 3, if $f_{R0} > f'_R$, the number of users $N$ is incremented instead of the aggregation link capacity $C$.

The next method to be described is similar to the one described before, with the following differences:

- In Step 1, an initial minimum access link capacity $r_{peak}$, instead of and an initial minimum aggregation link's capacity C
- In Step 3, if $f_{R0} > f'_R$, the access link capacity $r_{peak}$ is incremented instead of the aggregation link capacity $C$.

The offered traffic b is defined as $b = \lambda * \mu$ *(bps)*. The next method to be described is similar to the one described before, with the following differences:

- In Step 1, an initial minimum offered traffic $b$ is given, instead of and an initial minimum aggregation link's capacity C
- In Step 3, if $f_{R0} > f'_R$, the offered traffic $b$ is incremented instead of the aggregation link capacity $C$.

The next method to be disclosed consists of a direct application of equation 6, in order to determine the average end-to-end delay $E\{T(x)\}$ for a file of size $x$.

Link Dimensioning Method for Elastic Traffic with Throughput as Quality of Service Requirement

In S. B. Fredj, T. Bonald, A. Proutiere, G. Régnié, J. W. Roberts: "Statistical bandwidth sharing: A study of congestion at flow level",
http://www.acm.org/sigcomm/sigcomm2001/p9-ben_fredj.pdf, the (harmonic) mean throughput of a file (i.e. a flow) of size x is defined as:

$$\gamma(x) = \frac{x}{E\{T(x)\}} \quad (bps)$$

According to equation 6, for our processor sharing model, equation 7 yields to:

$$\gamma = \frac{r_{peak}}{f'_R} \; (bps) \tag{8}$$

Where $f'_R$ is the same as defined in equation 6. From equation 8, it is possible to observe that in our processor sharing model the mean throughput $\gamma$ is independent of the file size $x$.

The PS capacity dimensioning procedure is based on equation 8, and consists of an iterative process for finding the minimum capacity $C$ that satisfies a given throughput requirement (see figure 9 where this dimensioning procedure is schematically described). The delay throughput requirement is expressed by means of the average throughput $\gamma$ for a file (a flow) of any size.

Steps of the method include:

| Step 1 | The input parameters of the model are $r_{peak}$, $\lambda$, $\mu$, $N$, and a throughput requirement $\gamma$, and an initial minimum aggregation link's capacity $C$. |
|---|---|
| Step 2 | The PS model (equation 8) is applied and a certain throughput $\gamma_0$ is determined |
| Step 3 | The determined average throughput $\gamma_0$ is compared to the throughput requirement $\gamma$<br>- If $\gamma_0 < \gamma$ then the average throughput is still too low, and in order to increase it, the aggregation link capacity $C$ has to be incremented. In this case the method jumps to step 2.<br>- If $\gamma_0 \geq \gamma$ then the average throughput fulfils the throughput requirements and the process of finding the optimum capacity is finished. |

Following this philosophy, the methods described could also be modelled according to a given throughput requirement, instead of a given end-to-end delay requirement.

## Admission Control Method for Elastic Traffic Based on the Processor Sharing Model

In low-speed networks, it is usually adequate to wait for congestion to occur and to react to it by telling the source of the packets to slow down. In high-speed networks, this approach often works poorly, because in the interval between sending the notification and notification arriving at the source, thousands of additional packets may arrive. A major tool for preventing congestion in this kind of networks is admission control. When a new elastic flow adds to the network, the network can check to see if it is possible to handle this flow without adversely affecting existing connections and their respective QoS agreements.

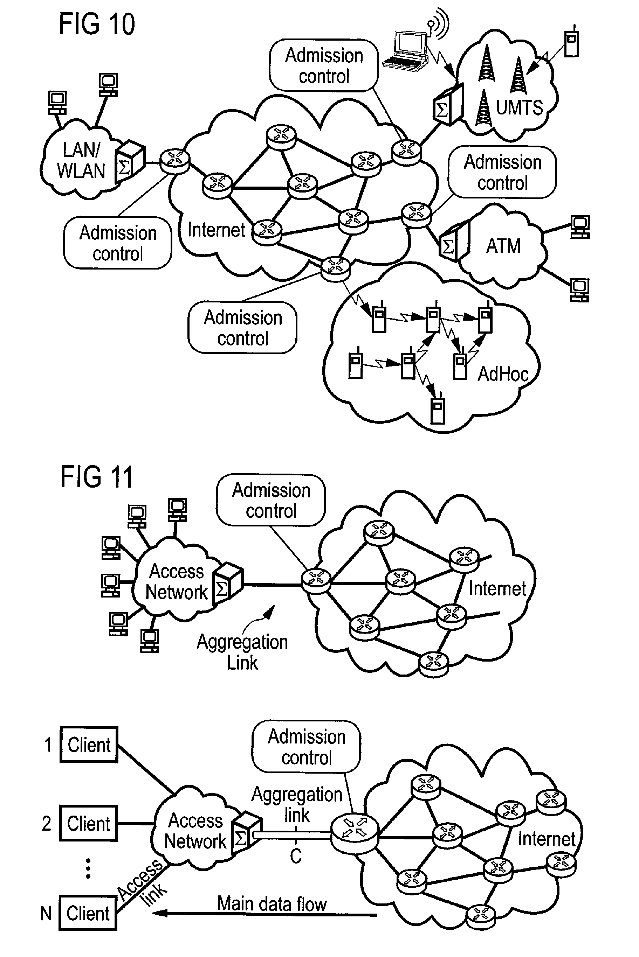

Typically, admission control methods reside in gateways or nodes that serve as an access point for a community of nodes (normally an access network) that accesses another network (like for instance the Internet). Figure 10 shows the location of the admission control methods in a real network. In this figure, the admission control points reside between different networks (LAN/WLAN, AdHoc, ATM ,UMTS) and the Internet.

The applicability of the processor sharing model described here to this problem is clearly reflected in figure 11.

As can be seen in figure 11 that there is an analogy between an access network connected to a bigger network (in the figure the Internet) through an admission control point, and the proposed processor sharing model. In order to apply the processor sharing model successfully, it must be possible to model the access network as a number of $N$ clients (or networks of clients) accessing the admission control node through $N$ access links of capacity $r_{peak}$.

This is not as difficult as it sounds. In fact, the reason why we want to apply admission control to the aggregation link is probably because it is a network bottleneck. Assuming this, it is possible to model the access network as it is shown in figure 11, no matter how complex the access network topology is.

## Admission Control Method for Elastic Traffic with End to End delay as Quality of Service Requirement

The concept of admission control for elastic traffic with end-to-end delay quality of service (QoS) requirement is outlined in the following paragraph:

Admission control, by limiting the number of flows using a bottleneck link, ensures that average end-to-end delay is never above some maximum acceptable level for flows that are admitted.

Where by a bottleneck link is understood the aggregation link shown in figure 11.

Admission control does not necessarily imply a complex flow setup stage with explicit signalling exchanges between user and network nodes. This would be quite unacceptable for most elastic flows, which are of very short duration. L. Massoulié and J. Roberts: "Arguments in favour of admission control for TCP flows", http://citeseer.nj.nec.com/500321.html and J. W. Roberts: "Engineering for quality of service", Self-Similar Network Traffic and Performance Evaluation, Wiley Inter-Science, March 2000, envisage a network rather similar to the present Internet where users simply send their data as and when they wish. However, nodes implementing admission control (like the one shown in figure 11) should keep a record of the identities of existing flows currently traversing each link in order to be able to recognise the arrival of a packet from a new flow. Such a packet is accepted and its identifier added to the list of active flows if the number of flows currently in progress is less than a threshold $\varphi$, and is otherwise be rejected. A flow is erased from the list if it sends no packets during a certain time-out interval. This admission control scheme seems feasible technically given recent developments in router technology (see V. P. Kumar, T. V. Lakshman, and D. Stiliadis: "Beyond best effort: router architectures for differentiated services of tomorrow's Internet. IEEE Commun. Mag., 36(5): 152-164, May 1998, S. Keshav and R. Sharma. Issues and trends in router design", IEEE Commun. Mag., 36(5): 144-151, May 1998).

Threshold Calculation

The threshold $\varphi$ symbolises the average number of flows that can be admitted in the aggregation link of figure 11 at a certain moment, so that the average end-to-end delay that every flow experiences is below a certain delay limit.

According to basic queuing theory, the average number of customers in our processor sharing system $E\{N_C\}$ is:

$$E\{N_C\}=N\cdot\lambda\cdot E\{T\} \qquad (9)$$

Where $E\{T\}$ is the *average sojourn time* (not the average sojourn time for a file of size $x$, which is $E\{T(x)\}$) and $N*\lambda$ the *average file request arrival time* in the aggregation link. The average arrival time of $N$ Poisson-distributed processes of average arrival time $\lambda$ is $N\cdot\lambda$. In our case, every customer represents a flow. Therefore, equation 3 expresses the average number of flows that are allowed to be in the system at the same time, so that the end-to-end delay that every flow experiences is in average below $E\{T\}$. Since $E\{N_C\}$ matches perfectly the definition of the threshold $\varphi$ given before, we can write $\varphi = E\{N_C\}$.

From equation 1 and basic probability theory, it is possible to derive an expression for $E\{T\}$:

$$E\{T\} = \int_0^\infty E\{T(x)\}\cdot f_X(x)\cdot dx = \frac{\mu}{r_{peak}}f_R^{'} \qquad (10)$$

Where $f_X(x)$ is the file size distribution, and $\mu$ is its average. Identifying terms in equation 9 with equation 10, an expression for the admission control threshold $\varphi$ is found:

$$\varphi=\frac{N\cdot\lambda\cdot\mu}{r_{peak}}f'_R \qquad (11)$$

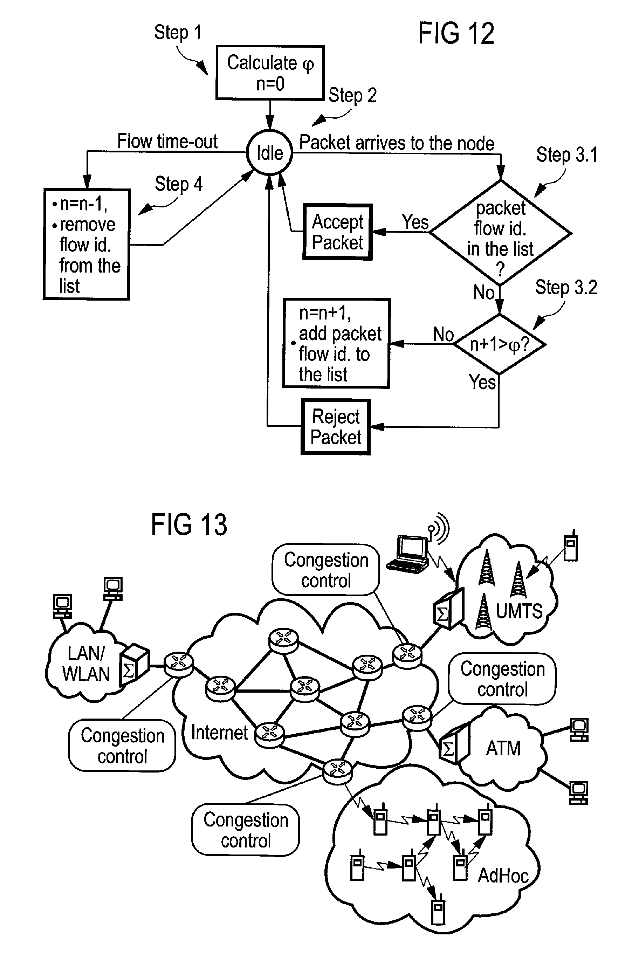

Where $f'_R$ and $\mu$ are defined in equation 6. Due to the fact that $\varphi$ will be a real positive number, it will be generally understood that the integer part of this number Int[$\varphi$] is taken when comparisons with integers are made (see for instance in figure 12).

Description of the Admission Control Method

According to the results obtained so far, the admission control method for elastic traffic can be schematically described according to figure 12.

| Step 1 | From the input parameters of the model: $N$, $\lambda$, $\mu$, $f'_R$ and $r_{peak}$, determine the threshold $\varphi$ that determines the maximum number of simultaneous flows allowed in the networks. When the network starts to work for the first time, the number of active flows registered in the link $n$ is initially 0. The method maintains additionally the so called active flow list that will contain the identifiers of the existing flows in the link. |
|---|---|
| Step 2 | Enter an "idle" state waiting for new packets to arrive or for existing flows to time-out |
| Step 3.1<br><br>Packet-arrive s to the node | If a new packet arrives to the node, the method looks if its flow identifier is already in the active flow list.<br>If it is so, the packet is accepted and the method jumps to step 2<br>- If not, then it is a new flow, and the method checks if the number of active flows n plus the arriving flow ($n + 1$) exceed the threshold $\varphi$ in step 3.2 |
| Step 3.2 Packet arrive<br><br>s to the node | A new packet has arrived and its corresponding flow is not in the list (i.e., it is a new flow). Then the method checks if the number of active flows $n$ plus the arriving flow ($n + 1$) exceed the threshold $\varphi$:<br>- If $n + 1 > \varphi$, then the new flow can not be accommodated without increasing the average end-to-end delay of the existing flows, and therefore the packet is rejected.<br>- If $n + 1 \leq \varphi$, then the average end-to-end delay for the $n + 1$ flows can still be in average below a certain limit (this limit can be expressed by $E\{T\}$ or equivalently by $f'_R$). Therefore the flow can be accommodated and the packet is accepted. Two additional actions are performed:<br>The number of active flows is incremented $n = n + 1$<br>The new flow identifier is added to the *active flow list*<br>The method returns to step 2. |
| Step 4<br><br>Flow times-out | If a flow does not send packets during a certain time interval, the flow times-out and the method performs<br>the following actions:<br>The number of active flows is reduced by one $n = n - 1$<br>- The identifier of the flow that times-out is removed from the *active flow list*<br>The method returns to step 2. |

If users are added or removed from the network, the method should go to step 1, in order to determine a new threshold $\varphi$.

Admission Control Method for Elastic Traffic with Throughput as Quality of Service Requirement

Now, an admission control method is defined according to one of the methods described above. The difference is that instead of accepting or rejecting an incoming packet if a certain average end-to-end delay requirement is fulfilled, here it is done depending on whether a given average throughput requirement is observed.

Let $\gamma$ be the given average throughput requirement, to be observed by all file transfers (all flows) traversing the link. Identifying terms in equation 10 with equation 9, an equivalence between the average end-to-end delay requirement $E\{T\}$ and the average throughput requirement $\gamma$ is:

$$E\{T\} = \frac{\mu}{\gamma} \qquad (12)$$

Finally, substituting equation 12 in equation 11, and expression for the threshold $\varphi$ as a function of the average throughput requirements $\gamma$ is found:

$$\varphi = \frac{N \cdot \lambda \cdot \mu}{\gamma} \qquad (13)$$

Due to the fact that $\varphi$ will be a real positive number, it will be generally understood that the integer part of this

number Int[φ] is taken when comparisons with integers are made (see for instance figure 12). The method described in figure 12 together with equation 13 describe the desired admission control method as a function of the average throughput in the link.

<u>Congestion Control Method for Elastic Traffic Based on the Processor Sharing Model</u>

One important task in network management is to ensure that the system is not overloaded and remains stable. If the system is properly planned and dimensioned, and the admission control works sufficiently well, overload situations should be exceptional. If overload is encountered, however, the congestion control functionality returns the system quickly and controllably back to the targeted load, which is defined by the network planning.

Due to the nature of elastic traffic, it is possible to use only closed-loop control solutions. These solutions are based on the concept of a feedback loop. This approach has three parts when applied to congestion control:

1. Monitor the system to detect when and where congestion occurs.
2. Pass this information to places where action can be taken.
3. Adjust system operation to correct the problem.

Various metrics can be used to monitor the subnet for congestion. Among the most important it is possible to measure the average packet delay, average packet throughput and the percentage of packets discarded for lack of buffer space.

The second step in the feedback loop is to transfer the information about the congestion from the point where it is detected to the point where something can be done about it.

In the third step a series of actions are taken in order to reduce congestion. The presence of congestion means that the load is (temporarily) greater than the resources (in part of the system) can handle. Two solutions come to mind: increase the resources or decrease the load. The first is normally not possible, or it might be the case where the resources have already been upgraded to the limit. The only way then to beat back the congestion is to decrease the load. There are many different mechanisms to this purpose, that can be roughly classified as follows:

- Traffic shaping (e.g. leaky bucket method, token bucket method)
- Flow specifications (contract flow agreements)
- Choke packets (e.g. weighted fair queuing, hop-by-hop choke packets)
- Load shedding

Normally the first three solutions require a high effort and expenditure, many protocol modifications and are not usually implemented in public networks like the Internet. For these reasons, the description of embodiments will focus on the last solution, load shedding.

Load shedding is a solution that consists of discarding the non-fitting packets that congested links can not cope with. Such a solution combines three different pieces of information: when congestion has occurred (congestion detection), which packets should be discarded (packet discarding policy) and how many flows should be discarded:

- Congestion detection: In order to discard packets, a node must detect first congestion in the network. In this invention, the idea is to detect congestion with the comparison between online measurements and the processor sharing model predictions.
- Packet discarding policy: A router drowning in packets can just pick packets at random to drop, but usually it can do better than that. For elastic traffic, an old packet (i.e. it belongs to an old file transfer or flow) is worth more than a new one. The reason is that if the packet is discarded the comparative number of retransmissions that have to be made in the first case would be much greater than in the second case. Retransmissions are undesirable since they mean additional network load that worsens congestion. According to this, a packet discarding policy could be to throw new packets first. Additionally, a packet priority system can be introduced in the network. In this case, a low priority packet would be more likely to be thrown away than a high priority packet.
- Number of flows to be discarded: Independently from the packet discarding policy, the question addressed here is: How many flows should be discarded? The idea is to determine the number $\chi$ of flows that should be discarded with the processor sharing model presented here. The criteria to determine this number $\chi$ is a given QoS requirement (e.g. packet end-to-end delay or packet throughput) that has to be fulfilled.

The methods described below give particular solutions for a congestion detection method, and for calculating the number of flows to be discarded. No specific packet discarding policy is specified in order to keep the methods as general as possible. However, the proposed scheme is flexible enough to allow the network designer to implement any policy, with for instance priority classes.

Applicability of the Processor Sharing Model to the Problem

Typically, congestion control methods (in particular the load shredding methods) reside in gateways or nodes that serve as an access point for a community of nodes (normally an access network) that accesses another network (like for instance the Internet). Figure 13 shows the location of the congestion control methods in a real network. In this figure, the congestion control points reside between different networks (LAN/WLAN, AdHoc, ATM and UMTS) and the Internet.

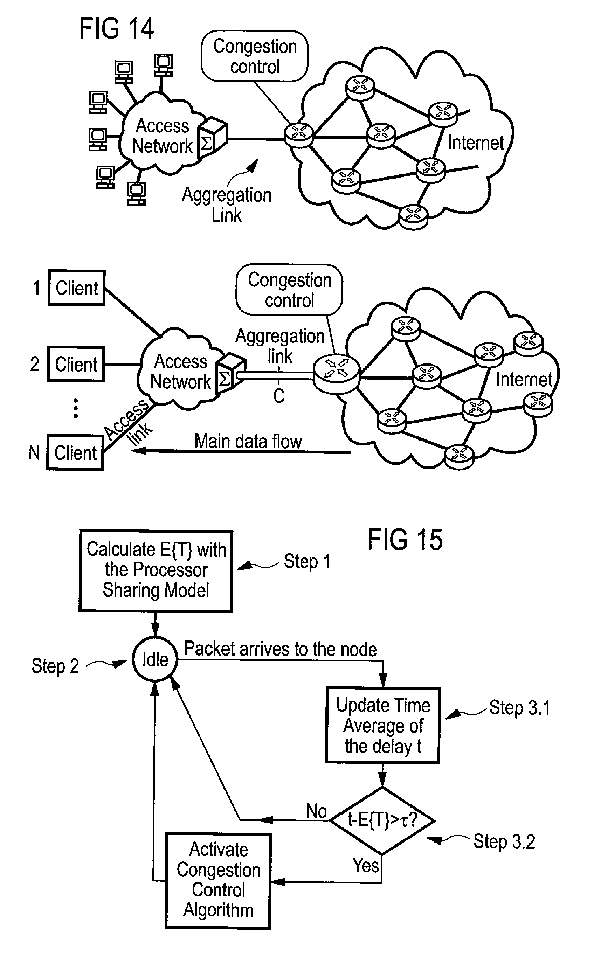

The applicability of the processor sharing model described here to this problem is clearly reflected in the figure 14.

It can be seen in figure 14 that there is an analogy between an access network connected to a bigger network (in the figure the Internet) through an congestion control point, and the proposed processor sharing model. In order to apply the processor sharing model successfully, it must be possible to model the access network as a number of N clients (or networks of clients) accessing the congestion control node through $N$ access links of capacity $r_{peak}$.

Congestion Control Method for Elastic Traffic with End to End Delay as Quality of Service Requirement

The next method to be described is based on two novel parts, a congestion detection method, and a formula that determines the number of flows to be discarded by the congestion control method.

Congestion Detection Method

The network node that implements the congestion control method (see figure 14) needs to be informed in real time about the network status regarding congestion. The informers should be those nodes which due to their strategic location are able to detect congestion. The TCP clients (or nodes close to them) can measure the delay of the different file downloads (elastic flows), which makes them ideal candidates for measuring congestion. One effective way of transferring this information to the network node implementing congestion control, is to send with every new TCP file request the end-to-end delay of the last file downloaded. In particular, this information can be encoded in one of the packet fields of the TCP file request. This allows the congestion detection method real-time monitoring of the end-to-end delay, without wasting network resources such as bandwidth. The congestion detection method can then establish based on the variation of the end-to-end delay measures when congestion has occurred. The congestion detection method is illustrated in figure 15.

| Step 1 | From the input parameters of the congestion control model: $N$, $\lambda$, $\mu$, $f'_R$ and $r_{peak}$, determine the average end-to-end delay of a file download $E\{T\}$ according to equation 6 |
|---|---|
| Step 2 | Enter an "idle" state waiting for new packets to arrive |
| Step 3.1<br><br>Packet arrives to the node | If a new packet arrives to the node it is checked if it is a packet requesting a new file download. If it is so, then the node extracts the information regarding the end-to-end delay $t_i$ of the last file downloaded by the client. With this value and the last $s - 1$ received at the node ($i > s$), the method determines the time average of the delay $t$ according to:<br><br>$$t = \sum_{k=i-s}^{i} t_k$$<br><br>the reason why this time average is used, is to avoid the method from being excessively sensitive to traffic bursts. |
| Step | If the time average of the delay $t$ is greater than |

| 3.2<br><br>Packet arrives to the node | the average delay predicted by the processor sharing $E\{t\}$ than a given threshold $\tau$, then the congestion control method is activated. Otherwise, no action is performed and the method jumps to step 2. |
|---|---|

The free parameters of this method are the number of samples s of the time average of the delay, and the threshold $\tau$. In order to establish reliable criteria for calculating the optimum values of them, a physical interpretation of these parameters should be found.

The parameter s is intuitively related to the traffic burstiness; the higher the bursts the more samples we need in the time average in order to have reliable information. Therefore, considerations regarding the self-similar nature of the traffic (e.g. Hurst parameter H) have to be made. The self-similarity is a measure of the traffic burstiness at different time scales. It manifests itself through the Hurst parameter **H**. In M.E. Crovella, L. Lipsky: "Simulations with heavy-tailed workloads", in: "Self-similar network traffic and performance evaluation", edited by K. Park and W. Willinger. ISBN 0-471-31974-0, Crovella and Lipsky provide for self-similar traffic the number of samples necessary to achieve "highly likely" p-digit accuracy in a time average as a function of $\alpha$:

$$s=10^{\frac{\rho}{1\frac{1}{\alpha}}} \tag{14}$$

Since $\alpha$ is related to $H$ according to the expression $\alpha = 3 - 2 \cdot H$ equation 14 constitutes an interpretation for the parameter s that can be outlined as follows:

Given a self-similar traffic with Hurst parameter H, the parameter s expresses the number of samples needed to be taken in the time average of the delay t in step 3.1, if a certain p-digit accuracy for this measure is required.

The threshold $\tau$ can be interpreted according to its definition as the maximum deviation of the measured average delay from the planned average delay that a network is allowed to have, before we consider it to be congested. However, this interpretation is not the only one. As it will be seen, the part of the invention described next offers another natural and spontaneous interpretation for it.

Method for Calculating the Number of Flows to be Discarded

Assume that congestion appears in the network, and that it has been properly detected by the method for congestion detection described above. The fact that the network is congested means that the average number of active flows has increased momentarily (i.e. there are more file transmissions going on). Assume that during congestion the user behaviour in average $\lambda$ remains the same, as well as the number of users $N$ in the network, and that the average measured delay is $t$. Then according to equation 9, the average number of flows in the link during congestion is:

$$\varphi_{congestion}=N \cdot \lambda \cdot t \tag{15}$$

We want to eliminate congestion, and to return to the targeted average end-to-end flow delay $E\{T\}$ determined by the processor sharing model (equation 10). Let $\varphi$ be the target average number of flows in the link determined with the network planning ($\varphi = N*\lambda*E\{T\}$). The number of flows $\chi$ that have to be eliminated from the link is:

$$\chi=\varphi_{congestion}-\varphi=N \cdot \lambda \cdot (t-E\{T\}) \tag{16}$$

The congestion control method will therefore select $\chi$ flows according to a certain packet discarding policy, and eliminate every packet traversing the link of which flow identifier belongs to one of the discarded flows. Due to the fact that generally $\chi$ will be a real positive number, the method eliminates in fact Int[$\chi$] flows, where Int[ ] denotes the integer part of a real number.

Additionally, the method described here, gives also a natural interpretation for the threshold parameter $\tau$. In fact, according to equation 16, $\tau = \chi / (N*\lambda)$. That means:

Let $\varphi$ be the average number of flows determined by the network planning, and $\chi$ the additional number of flows that a network really has at a certain moment. The threshold $\tau$ is then proportional to the maximum number of additional elastic flows $\chi$ that a network is allowed to have, before we consider it to be congested.

Congestion Control Method for Elastic Traffic with Throughput as Quality of Service Requirement

In this method, a congestion control method is defined according to the method described above. The difference is that instead of defining congestion from the comparison of the measured end-to-end delay and the average planned end-to-end delay, it is done depending on the measured and planned average throughput.

The congestion detection method described above can function with average throughput instead of average end-to-end delay if some minor changes are made. Instead of measuring end-to-end delay, the clients (or nodes close to them) now measure the throughput of the last flow $\gamma'_k$, and send this information to the congestion control node, coded in the TCP packet requests. Let $\gamma$ be the planned average throughput, and $\gamma'$ (where $\gamma'=$

$$\gamma'=\sum_{k=i-s}^{i}\gamma'_k \text{ )}$$

the time average of the measured throughput. Step 3.2. in figure 15 now decides that there is congestion in the network if and only if $\gamma - \gamma' > \tau$ (the congested throughput $\gamma'$ is below the planned throughput $\gamma$). The interpretation of the parameters $\tau$ and $s$ remains basically the same, changing "average throughput" for "average end-to-end delay".

The number of flows $\chi$ that have to be eliminated from the link as a function of the measured and planned throughputs ($\gamma'$ and $\gamma$) can be determined from equation 13:

$$\chi = \varphi_{congestion} - \varphi = \frac{N \cdot \lambda \cdot \mu \cdot (\gamma - \gamma')}{\gamma \cdot \gamma'} \tag{17}$$

The congestion control method selects therefore $\chi$ flows according to a certain packet discarding policy, and eliminate every packet traversing the link of which flow identifier belongs to one of the discarded flows.

Load Balancing Method for Elastic Traffic Based on the Processor Sharing Model

The problem of load balancing consists of distributing a certain load offered to a node in order to maintain a given QoS requirement for all flows traversing it. In the case of the present invention, this QoS requirement either the average end-to-end flow delay, or the average flow throughput.

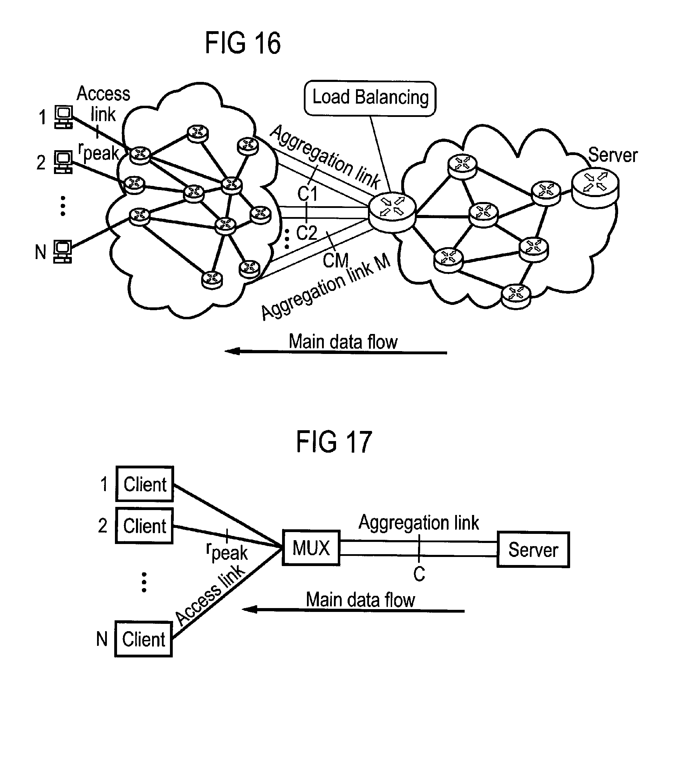

Figure 16 introduces the load balancing scenario where a number $N$ of clients request flows to a certain server or network of servers through $N$ access link of capacity $r_{peak}$. After being aggregated, data flows can be transferred to their destination client through one of M possible aggregation links. In the general case, these aggregation links will have different capacities $C_1 \neq C_2 \neq , ..., \neq C_M$. The load balancing method decides through which aggregation link every flow is sent so that in average a certain QoS requirement is fulfilled.

Load Balancing Method for Elastic Traffic with End to End delay as Quality of Service Requirement

Figure 17 shows the typical scenario that can be modelled with the processor sharing model.

The applicability of the processor sharing model to the load balancing scenario in figure 16 is not straightforward. The reason is that while the processor sharing can model only one aggregation link (figure 17), the load balancing scenario has $M$ aggregation links (figure 16). The following approach has been taken in order to overcome the above mentioned problem:

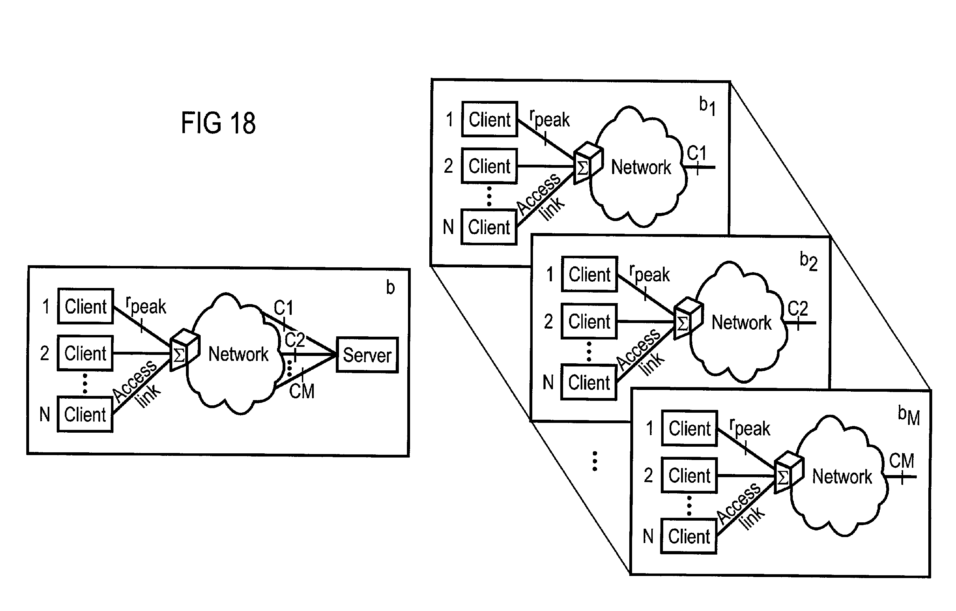

As can be seen in figure 18, the load balancing scenario is modelled with $M$-overlapping processor sharing models. Each overlapping model offers a different traffic load $b_i$ to the correspondent aggregation link of capacity $C_i$. The rest of the parameters (e.g. $r_{peak}$, $N$) are kept the same among the different overlapping models.

The influence of the network drawn in figure 18 as a cloud is negligible as far as it contains no bottleneck. If this network contained a potential bottleneck link, the load sharing method should be applied to this link as well, in order to alleviate the situation. Here a load balancing method is presented for uplink traffic as well.

According to the approach in figure 18, load balancing as it is described here comprises:

- First, finding the optimal distribution $b_1, ..., b_M$ of a given load $b$ for every overlapping processor sharing model, so that every flow traversing the node experiences the same end-to-end average delay $E\{T\}$. This method will be referred to as the load distribution method.
- Second, controlling that while functioning, the network distributes the offered load according to the calculations made by the load distribution method. This method will be referred to as the load balancing method.

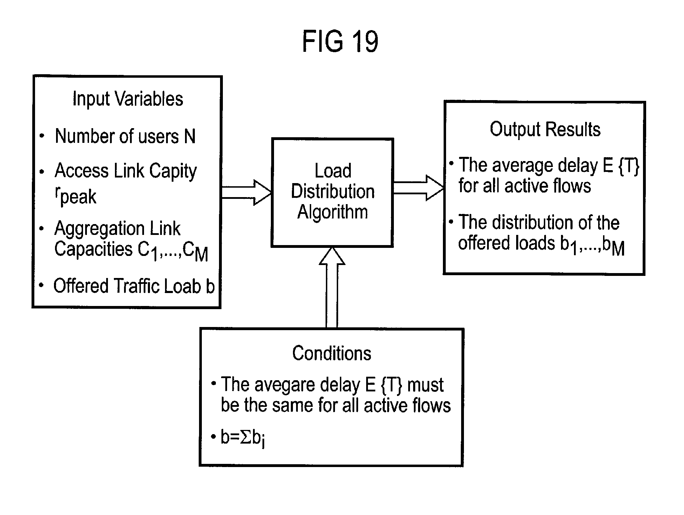

The average delay $E\{T\}$ equal to all active flows is unknown, and will be determined in the load distribution method as well. Figure 19 illustrates the process.

Once the distribution $b_1, ..., b_M$ and the average delay $E\{T\}$ have been found, it is possible to determine according to equation 9 the threshold $\varphi_i$ that represents the average number of active flows in every overlapping model.

The load balancing method consists of an active process that redirects the packets received at the node in figure 16 to one of the possible aggregation links. The criteria to do this, is to maintain the number of active flows in every possible aggregation link below its respective threshold $\varphi_i$. By doing this, the method assures that the end-to-end delay of all the flows in the network is not higher in average than the targeted delay $E\{T\}$.

Load Distribution Method

If the file request arrival time is modelled with a Poisson distribution of parameter $\lambda_i$, and the file size is *modelled with a heavy-tailed* distribution of average $\mu_i$, the offered traffic load is $b_i = \lambda_i * \mu_i$. Assuming that the file sizes are equally distributed with average $\mu$ in all the overlapping processor sharing models (this assumption generally holds, since the average of the file size distribution is normally taken from Internet measurements of the size distribution of objects in web pages, e-mails, etc., which are independent of the users), the offered traffic load is $b_i = \lambda_i*\mu$. If the original offered traffic load in the load balancing scenario is $b$, the following equation must hold:

$$b = \sum_{i=1}^{M} b_i \qquad (18)$$

The criteria followed to balance the load among the different access links in figure 18 is to have the same average delay $E\{T\}$ for all active flows. The exact value of $E\{T\}$ is unknown, the only requirement is that all flows must experience the same delay $E(T)$, whatever its value is. According to figure 18 the load balancing problem consists of finding the offered loads $b_i$, $\forall\ i \in \{1, ..., M\}$ so that the average flow delay is $E\{T\}$ and equation 18 holds. Since the average $\mu$ does not depend on $i$, this problem is equivalent to finding the average file request arrival times $\lambda_i$, $\forall\ i \in \{1, ..., M\}$ so that the average flow delay is $E\{T\}$ and equation 18 holds.

For a certain overlapping processor sharing $i$, the model parameters are:

- Number of clients $N$. This parameter is common to all overlapping models
- Average file size distribution $\mu$. This parameter is common to all overlapping models
- Access link capacity $r_{peak}$. This parameter is common to all overlapping models
- Aggregation link capacity $C_i$
- Average file request arrival time $\lambda_i$

Due to the fact that the aggregation link capacity is different in every case, the parameter $R$ (see equation 6) is also dependent on the overlapping model: $R_i = r_{peak} / C_i$.

According to equation 10 the delay factor $f'_R$ is expressed as a function of the average end-to-end delay $E\{T\}$.

$$f'_R = \frac{r_{peak}}{\mu} E\{T\} \qquad (19)$$

For the sake of simplicity, this section continues working exclusively with the delay factor. However equation 19 provides always a way to interpret the delay factor $f'_R$ in terms of average end-to-end delay $E\{T\}$.

It is observed that the delay factor is independent of $i$. According to equation 1, in every overlapping processor sharing model $i$ the following equation must hold:

$$f'_R = \frac{E_2(R_i, R_i * \rho_{aggregation\ link_i})}{R_i \cdot (1 - \rho_{aggregation\ link_i})} + \frac{1}{1 - \rho_{access\ link_i}} \ ; \qquad (20)$$

$$\rho_{aggregation\ link_i} = \frac{N \cdot \lambda_i \cdot \mu}{C_i} ; \qquad \rho_{access\ link_i} = \frac{\lambda_i \cdot \mu}{r_{peak}} ; \qquad R_i = \frac{C_i}{r_{peak}}$$

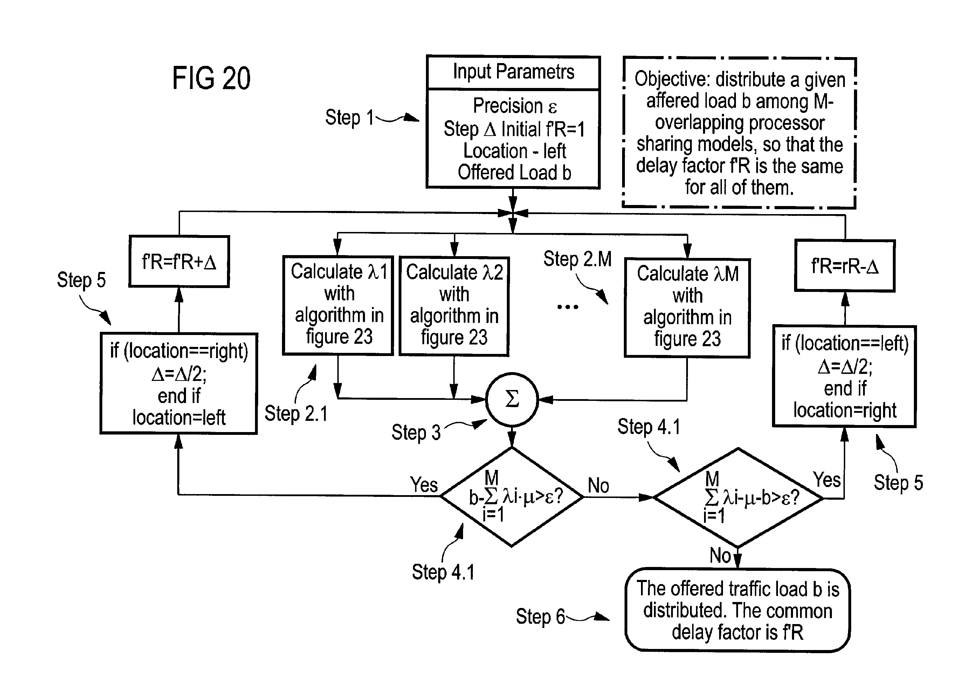

Solving with an iterative process equation 20 for $\lambda_i$ in every overlapping model $i$, allows us to determine the offered traffic load $b_i = \lambda_i * \mu$. Additionally, a resultant delay factor $f'_R$ common to all active flows is obtained. Figure 20 illustrates this process in detail.

| Step 1 | The following input parameters are needed: |
|---|---|
| | - the precision parameter $\varepsilon$: When the method stops the addition of the distributed loads $\lambda_i * \mu$ is closer than $\varepsilon$ to the offered load $b$ |
| | - The step $\Delta$ determines the granularity of the search for the optimum delay factor $f'_R$ common to all flows. A good initial value brought by experience is $\Delta = 1$ |
| | - The initial delay factor $f'_R$ is assumed to be 1. This is the minimum value that the delay factor |

| | | |
|---|---|---|
| | | can have |
| | | - The location variable indicates whether the actual guessed delay factor is to the left (i.e. it is smaller) or to the right (i.e. it is bigger) of the optimum delay factor $f'_R$ (i.e. the solution to the method). The initial guessed delay factor equals 1. Since this is the minimum possible value for the delay factor, it is to the left of the solution to the method, and therefore location = left.<br>- The offered load $b$ is the load to be distributed among the $M$-overlapping processor sharing models, so that the delay factor for all of them is the same.<br>- Additional input parameters not shown in the picture for the sake of simplicity are: $\mu$, $r_{peak}$ and $C_1, \ldots, C_M$. |
| Step 2.1<br>.<br>.<br>.<br>Step 2.M | | Calculate for every $M$-overlapping processor sharing model, the parameter $\lambda_i$ so that the given delay requirement guess of the moment $f'_R$ is fulfilled. Calculating the parameters $\lambda_1, \ldots, \lambda_M$ is equivalent to calculating the load distribution $b_1, \ldots, b_M$, due to the fact that $b_i = \mu * \lambda_i$ |
| Step 3 | | In order to check if the addition of the determined offered loads for every overlapping model $\sum_{i=1}^{M} \lambda_i \cdot \mu$ is equal to the offered load $b$, they are added. |
| Step 4.1 | | If $b - \sum_{i=1}^{M} \lambda_i \cdot \mu > \varepsilon$, the addition of the distributed load is not high enough. Consequently the determined delay factor $f'_R$ common to all overlapping model is too low. Therefore the determined delay factor is to the left (i.e. it is smaller) of the optimum, and it must be incremented. |

| Step 4.2 | If $\sum_{i=1}^{M} \lambda_i \cdot \mu - b > \varepsilon$, the addition of the distributed load is not low enough. Consequently the determined delay factor $f'_R$ common to all overlapping model is too high. Therefore the determined delay factor is to the right (i.e. it is bigger) of the optimum, and it must be decremented. |
|---|---|
| Step 5 | When the determined delay factor was smaller than the optimum in the last iteration loop and now it is bigger (or vice versa) the step $\Delta$ is halved. This step is necessary for the method to converge. |
| Step 6 | When $\left|\sum_{i=1}^{M} \lambda_i \cdot \mu - b\right| \le \varepsilon$ the method stops, and the offered traffic load $b$ is distributed among the $M$-overlapping processor sharing models. The common delay factor to them is $f'_R$ |

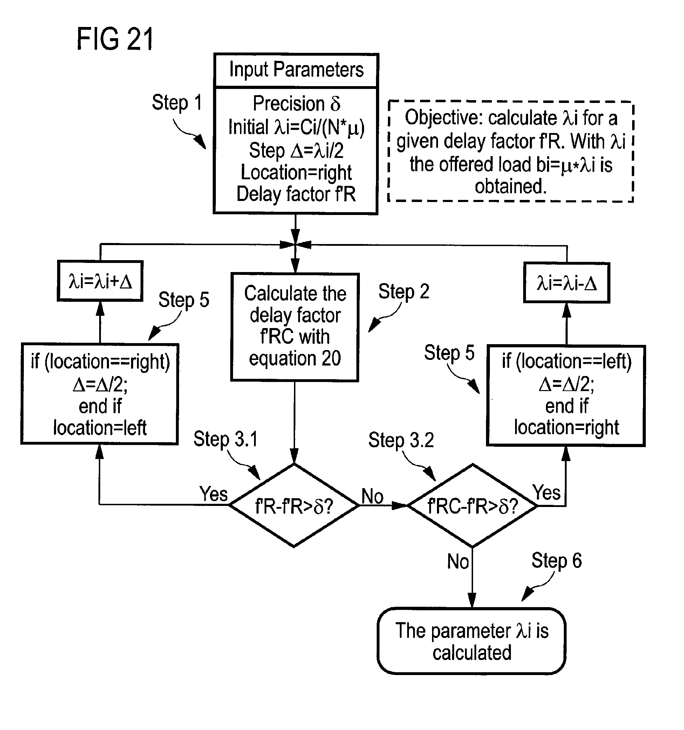

The method for calculating $\lambda_i$ follows the same philosophy, and it is described in detail in figure 21.

| Step 1 | The following input parameters are needed:<br>- the precision parameter $\delta$: When the method stops the determined delay factor $f'_{RC}$ is closer than $\delta$ to the given delay factor $f'_R$<br>- The initial $\lambda_i$ is assumed to have the maximum value, which happens when the utilisation factor of the link $\rho = 1$. Therefore $\lambda_i = c_i / (\mu^*N)$ (equation 6)<br>- The step $\Delta$ determines the granularity of the search for the optimum delay factor $f'_R$ common to all flows. Due to the fact that the initial $\lambda_i$ represents the maximum value, the method starts with $\Delta = \lambda_i / 2$<br>- The location variable indicates whether the actual determined delay factor $f'_{RC}$ is to the left (i.e. it is smaller) or to the right (i.e. it is bigger)<br>of the given delay factor $f'_R$(i.e. the solution to the method). Since the initial $\lambda_i$ represents its maximum value, the determined delay factor is to the right of the solution to the method. Therefore the parameter location = right initially.<br>- The given delay factor $f'_R$ is the delay factor that all overlapping models must observe. The load bi is determined in order to make the statement above true<br>- Additional input parameters not shown in the picture for the sake of simplicity are: $\mu$, $r_{peak}$ and $C_1$, ..., $C_M$. |
|---|---|
| Step 2 | With the initial values $\lambda_i$ determine with equation 20 the delay factor $f'_{RC}$ |
| Step 3.1 | If $f'_R - f'_{RC} > \delta$, the determined delay factor is not high enough. Consequently the distributed load $\lambda_i$ is too low. Therefore the determined $\lambda_i$ is to the left (i.e. it is smaller) of the optimum, and it must be incremented. |
| Step 3.2 | If $f'_{RC} - f'_R > \delta$, the determined delay factor is not low enough. Consequently the distributed load $\lambda_i$ is too high. Therefore the determined $\lambda_i$ is to the right(i.e. it is smaller) of the optimum, and it must be decremented. |
| Step 5 | When the determined delay factor was smaller than the optimum in the last iteration loop and now it is bigger (or vice versa) the step $\Delta$ is halved. This step is necessary for the method to converge. |
| Step 6 | When $|f'_R - f'_{RC}| \le \delta$ the method stops, and the parameter $\lambda_i$ is determined |

Equation 19 provides a way to interpret the delay factor $f'_R$ obtained from the method in figure 20 in terms of average end-to-end delay $E\{T\}$. This average end-to-end delay can be interpreted as the delay that all active flows traversing the link experience in average, and it will be the target QoS requirement to be fulfilled by the load balancing method described in the next section.

Load Balancing Method

Once the distribution $b_1, ..., b_M$ and the average delay $E\{T\}$ have been found, it is possible to determine according to equation 9 the threshold $\varphi_i$ that represents the average number of active flows in every overlapping model:

$$\varphi_i = N \cdot \lambda_i \cdot E\{T\} \qquad (21)$$

Where $\lambda_i$ is related to the offered load as follows $\lambda_i = b_i / \mu$.

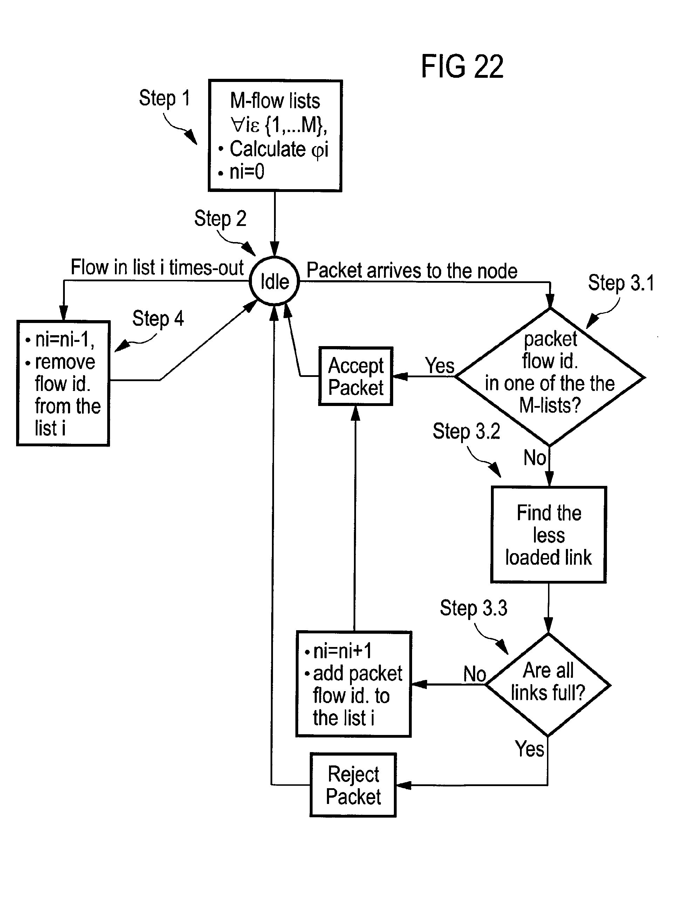

The load balancing method consists of an active process that redirects the packets received at the node to one of the possible aggregation links. The criteria to do this, is to maintain the number of active flows in every possible aggregation link below its respective threshold $\varphi_i$. By doing this, the method assures that the end-to-end delay of all the flows in the network equals in average the targeted delay $E(T)$. The figure 22 describes in detail this method:

| | |
|---|---|
| Step 1 | From the input parameters of the model: $N$, $\lambda_1$, ..., $\lambda_M$, $C_1$, ..., $C_M$, $\mu$, $f'_R$ and $r_{peak}$, determine the thresholds $\varphi_i$ $\forall i \in \{1, ..., M\}$ that determines the maximum number of simultaneous flows allowed in every aggregation link. When the network starts to work for the first time, the number of active flows $n_i$ registered in every link $i$, is initially 0. The method maintains additionally *M-active flow lists* that will contain the identifiers of the existing flows in every aggregation link. |
| Step 2 | Enter an "idle" state waiting for new packets to arrive or for existing flows to time-out |

| Step 3.1 Packet arrives to the node | If a new packet arrives to the node, the method looks if its flow identifier is already in one of the *active flow lists*.<br><br>- If it is so, the packet is accepted and the method jumps to step 2<br>- If not, then it is a new flow, and the method checks if it can be allocated in one of the aggregation links in step 3.2 |
|---|---|
| Step 3.2 Packet arrives to the node | A new packet has arrived and its corresponding flow is not in any list (i.e., it is a new flow). Then the method finds the less loaded link. The aggregation link $i$ is the less loaded link if and only if $i = \arg\min_{i \in \{1,...,M\}} [\varphi_i - n_i]$, where $\varphi_i$ is the maximum number of lows allowed in link $i$, and $n_i$ is the number of flows registered in it. |
| Step 3.3 Packet arrives to the node | - If all the links are full (i.e. $\forall i \in \{1, \ldots, M\}$, $n_i + 1 > \varphi_i$, then the new flow can not be accommodated without increasing the average end-to-end delay of the existing flows, and therefore the packet is rejected. Another version of this method could accept this packet and register its correspondent flow in the less loaded link. In this case, no packets would be rejected, however the average target delay would not be guaranteed.<br>- If some aggregation link $i$ can accommodate the flow, then the average end-to-end delay for all the flows can be still below a certain limit (this limit can be expressed by $E\{T\}$ or equivalently by $f'_R$). Therefore the flow and the packet are accepted. Two additional actions are performed:<br>- The number of active flows in the aggregation link $i$ is incremented $n_i = n_i + 1$<br>- The new flow identifier is added to the *active flow list* of the $i$ aggregation link |

| | | |
|---|---|---|
| | | The method returns to step 2. |
| | Step 4<br><br>Flow<br>times<br>out | If a flow does not send packets during a certain time interval, the flow times-out and the method performs the following actions:<br>- The number of active flows in the aggregation link $i$ is reduced by one $n_i = n_i - 1$<br>- The identifier of the flow that times-out is removed from the *active flow list* of the aggregation link $i$<br><br>The method returns to step 2. |

Load Balancing Method for Elastic Traffic with Throughput as Quality of Service Requirement

In this method, load balancing method is defined according to the method described above. The difference is that instead of being the target QoS requirement an average delay $E\{T\}$ constant to all active flows, now it is an average throughput $\gamma$.

For the sake of simplicity, instead of working with the average throughput $\gamma$, this section works exclusively with the delay factor $f'_R$, according to equation 8. Since the methods described in before are dependent only on the delay factor as well, they can be applied directly to this section without any modification. As a result from these methods, an optimal load distribution $b_1, ..., b_M$ is obtained. Additionally, a resultant delay factor common to all active flows $f'_R$ is obtained. Equation 8 provides a way to interpret this delay factor in terms of average throughput $\gamma$. This average throughput $\gamma$ is the throughput that all active flows traversing the link have in average, and it will be the target QoS requirement to be fulfilled by the load balancing method.

Once the average throughput $\gamma$ and the optimal load distribution $b_1, ..., b_M$ are determined, the average number of flows in every overlapping processor sharing model can be determined according to equation 11. In particular, for the $i$-processor sharing model:

$$\varphi_i = \frac{N \cdot \lambda_i \cdot \mu}{\gamma} \qquad (22)$$

The load balancing method described before can be then applied directly to this section without any modification.

Applicability of the Processor Sharing Model to Realistic TCP/IP Network Scenarios

The intention of the following is to broaden the possibilities of the processor sharing model to characterise traffic in realistic network scenarios. Several solutions are given, in particular, a bottleneck approach, a method addressed the problem of several traffic classes, a method for networks with different access rates, a method dealing with the problem of characterising uplink traffic.

The Bottleneck Principle

TCP congestion control mechanism adjusts traffic's throughput according to the link characteristics. When a TCP connection traverses several links, TCP adapts its throughput rate to the network section with the worst throughput performance. This section is often referred to as the network bottleneck. Since the bottleneck determines the overall network throughput, it has to be properly dimensioned. Changing the capacity in any other section of the network will not change the network throughput, unless by doing so we make this section to become the new bottleneck of the network. For the reasons mentioned above:

It is only necessary to apply the processor sharing model to the bottleneck of the network. Moreover, the throughput determined with the processor sharing model in the bottleneck, will be valid for the whole network.

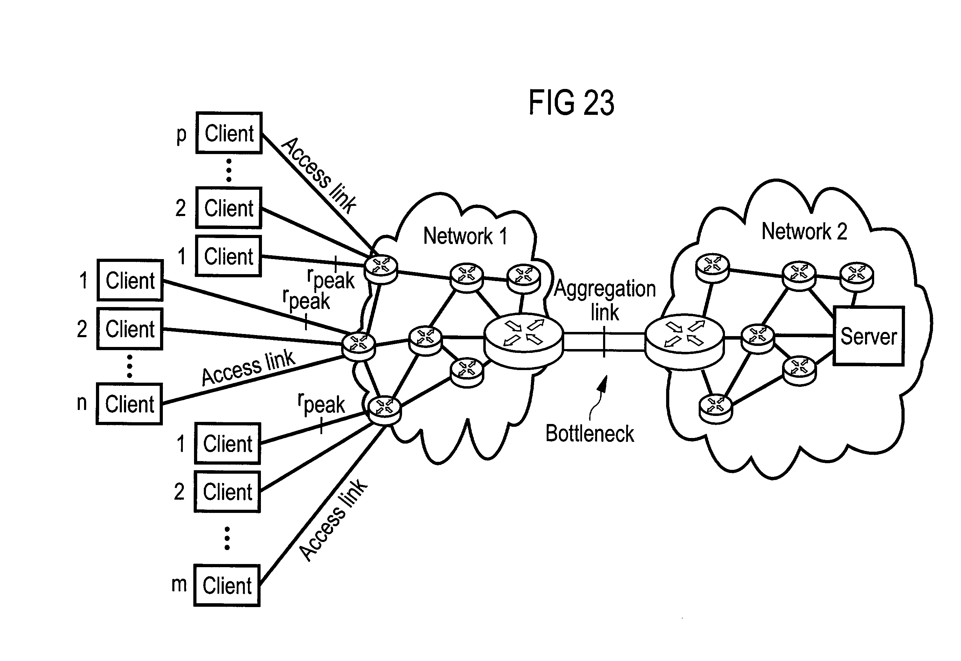

The figure 23 illustrates the repercussions of this statement.

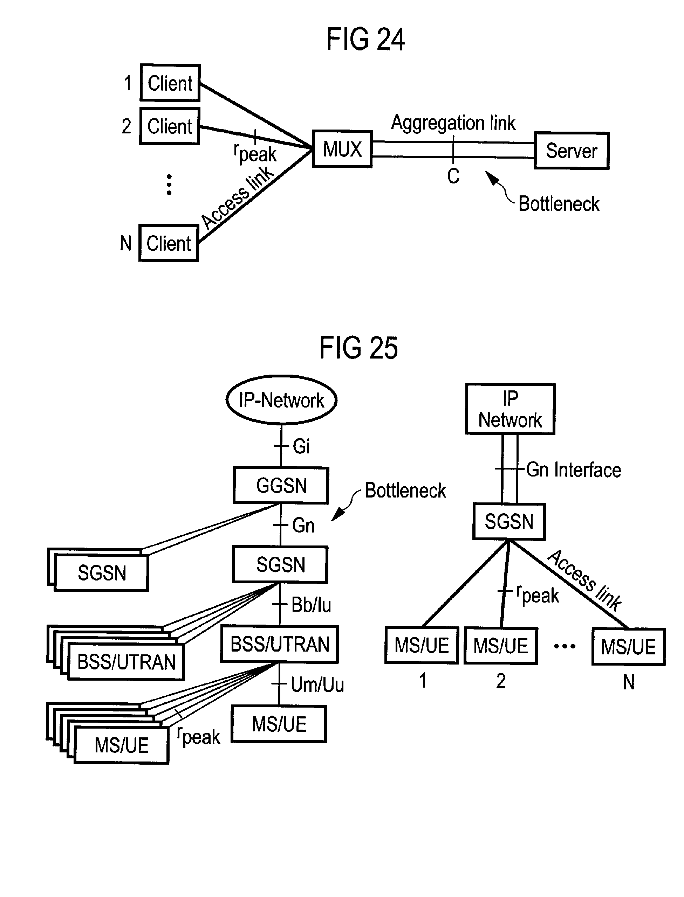

The figure presents a typical access network. Assuming that the bottleneck is located in the aggregation link, it is enough to apply the processor sharing model to this link. According to this, figure 24 is equivalent to figure 23.

Where $N = p + n + m$. The throughput determined with the processor sharing model in the network of figure 24 is the same as that in the network of figure 23, due to the fact that the bottleneck plays a major role in determining the throughput characteristics of the whole network.

This principle broadens the range of cases where the processor sharing model can be applied and simplifies the analysis of complex networks. It can be used with any method described here, like for instance, with the link dimensioning method or with the admission control method.

Figure 3 introduces a more concrete example of this important principle. It describes the typical radio access network of a GRPS/UMTS architecture. Assuming that the potential bottleneck of the network is in the *Gn* interface, the processor sharing model can be applied as figure 25 shows.

Where $N$ is the number of mobile systems (MS) or user equipment (UE), $r_{peak}$ is the access link rate between the MS / UE and the BSS / UTRAN, and $G_n$ is the interface where the dimensioning method, admission control method, etc. can be applied.

Networks with Several Traffic Classes

The processor sharing has a series of limitations that restraint its applicability. These limitations come mostly from the fact that the model assumes all the clients to be homogeneous (e.g. with the same offered traffic $\lambda^*\mu$, with the same QoS requirements). In real scenarios, network parameters are however not so symmetric. The traffic class concept aims to reconcile the processor sharing model with this asymmetry.

In an asymmetric scenario clients have different behaviour requesting traffic from the network, their access rates are different, and they require different QoS requirements (e.g. different average end-to-end delay or different average throughput). However it is generally possible to map this complex scenario into sub-scenarios, each one having common homogeneous characteristics. For instance in a network like the one in figure 24, if clients from 1 to 5 demand an end-to-end delay $d_1$, and clients from 6 to N demand a different end-to-end delay $d_2$, it is possible to divide this scenario in two. The first sub-scenario would consist of clients 1 to 5 demanding $d_1$ seconds of end-to-end delay, and the second sub-scenario would consist of clients 6 to N demanding $d_2$ seconds of end-to-end delay. Each sub-scenario is homogeneous, and it is possible to apply the processor sharing model to it separately. The results can be then put together, by generally just adding them.

Every sub-scenario mentioned in the example above, would be what it is called a traffic class. The differentiating factor among different traffic classes are network parameters such as access rate, demanded traffic, required QoS, or combinations of them.

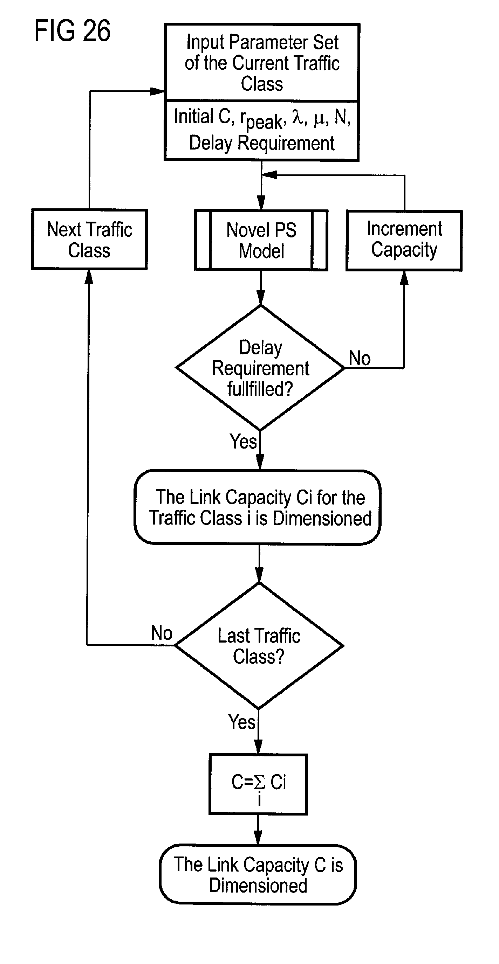

Once the different traffic classes have been defined in a certain network, the processor sharing model can be applied recursively to each one. Figure 26 shows illustratively an example of this process in the case of the link dimensioning method defined above.

The number of traffic classes can be as much as necessary, in order to be able to define sub-scenarios with homogeneous network parameters.

Networks with Different Access Link Rates

The processor sharing model assumes that all users have approximately the same maximum access bit rate $r_{peak}$. This assumption might not be necessarily correct in a real network, and thus, the situation where different file transactions have different highest possible bit rates deserves some further study.

To address this problem, we would either have to find a multi-rate extension of equation 1 (like the case of multi-rate Erlang-B formula), or reuse the single rate formula in a proper way. The first possibility is for further study, whereas in the second case we can proceed in two different ways:

1. From the different $r_{peak}$ determine an average value:

$$E\{r_{peak}\} = \rho^{-1} \sum_i \rho_i r_{peak\_i}$$

where

$$\rho = \sum_i \rho_i \ ,$$

and use this average value $E\{r_{peak}\}$ as a general access rate for all the links.

2. As it was mentioned in the section before, define Traffic Classes with equal $r_{peak}$ value and use the processor sharing model in each Traffic Class separately. Finally put together all the results, by generally just adding them.

Application of the Processor Sharing Model for Characterising Uplink Traffic

It is generally accepted that uplink traffic characteristics are approximately those of downlink traffic. The only difference is that normally the volume of uplink traffic is much lower than the volume of downlink traffic. This difference is especially important for client-server applications (e.g. HTTP), where clients usually download great amounts of information from several servers. In this case, the difference in traffic volume can be of 10 to 1.

However, for client-client applications (e.g. Voice over IP), the uplink traffic volume can be as important as the downlink one. In this cases, it is crucial to take this fact into account, and to develop a palette of methods (e.g. dimensioning, admission control, congestion control, load balancing) for uplink traffic as well.

The processor sharing model has the nice property of being bidirectional. That is, it can be used either for characterising downlink or uplink traffic. Moreover, Opnet® simulations made by CT IC 2 have shown that most normal network configurations present this symmetric property as well. It is therefore straightforward to develop methods for uplink traffic analogue to the ones presented.

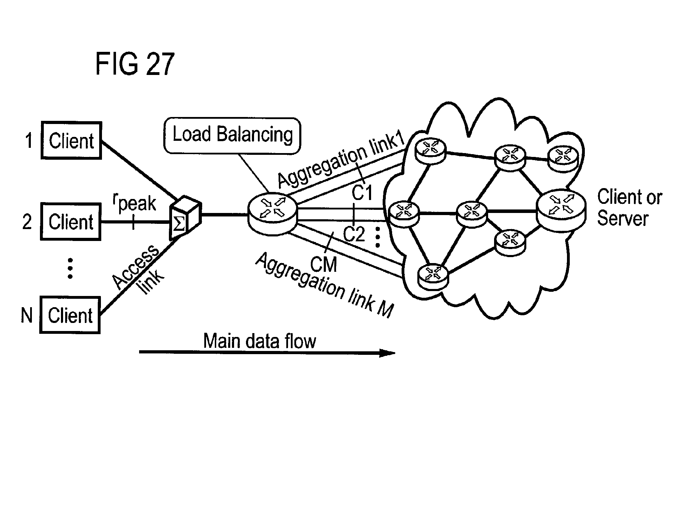

For instance, let us consider the case of load balancing. This case was considered above for downlink traffic. In the case of uplink traffic, the load balancing scenario would be like illustrated in figure 27.

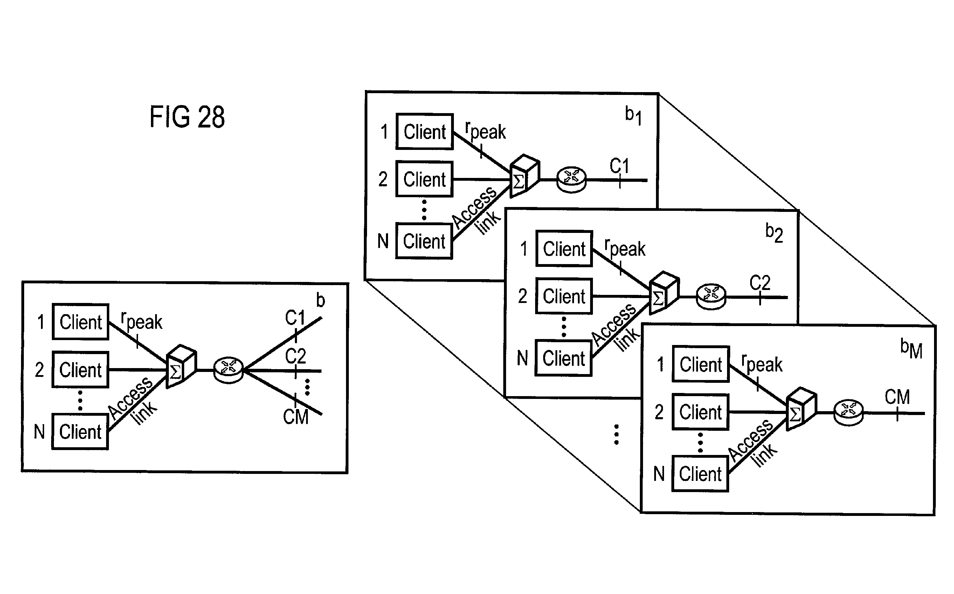

In this case, this scenario can be also modelled with $M$-overlapping processor sharing models, as figure 28 illustrates.

With the interpretation provided by figure 27 and figure 28, the method developed above can be applied to the problem without any modification.

Upon reference to the foregoing, those skilled in the art will appreciate that by combining various portions of the different modelling techniques, the model described herein may be utilised to accurately describe aggregate traffic originating from multiple heterogeneous sources that may have widely diverse traffic types and characteristics and which can be utilised to actually characterise a proposed network so that customer expectations and network efficiency may be maintained at high levels.

While the invention has been particularly shown and described with reference to a preferred embodiment, it will be understood by those skilled in the art that various changes in form and detail may be made therein without departing from the spirit and scope of the invention.

**Claims**

1. A method for modelling traffic within a shared transmission network comprising an aggregation link for transmitting traffic to a number of access links and an access link for transmitting traffic via different active connections to a client, the access link being connected with the aggregation link, said method comprising the steps of:

   determining a delay of the traffic due to the transmission of the traffic through the aggregation link;

   determining a delay of the traffic due to the transmission of the traffic through the access link comprising the step of determining a delay of the traffic due to the sharing of the access link among the different active connections; and

   determining a combined delay of the traffic by combining the delay of the traffic due to the transmission in the aggregation link and the delay of the traffic due to the transmission of the traffic through the access link.

2. The method for modelling traffic according to claim 1, wherein said step of determining the delay of the traffic due to the transmission in the aggregation link comprises the step of determining the delay taking into account the capacity $C$ of the aggregation link, the capacity $r_{peak}$ of the access link, the number of clients $N$ sending file requests over the network, the average file request arrival time $\lambda$, and/or the average file size $\mu$.

3. The method for modelling traffic according to claim 1 or 2,
wherein said step of determining the delay of the traffic due to the transmission in the aggregation link comprises
the step of determining a mean sojourn time $E_{ag}\{T(x)\}$ for the aggregation link.

4. The method for modelling traffic according to claims 2 and 3,
wherein said step of determining the delay of the traffic due to the transmission in the aggregation link comprises
the step of determining a mean sojourn time $E_{ag}\{T(x)\}$ for a given file size $x$ in the aggregation link according to

$$E_{ag}\{T(x)\} = \frac{x}{r_{peak}} \cdot \left( \frac{E_2\left(R, R \cdot \rho_{aggregation\ link}\right)}{R \cdot (1 - \rho_{aggregation\ link})} \right)$$

where

$$\rho_{aggregation\ link} = \frac{N \cdot \lambda \cdot \mu}{C}; \qquad R = Int\left[\frac{C}{r_{peak}}\right];$$

and

$$E_2(R, A) = \frac{\dfrac{A^R}{R!} \cdot \dfrac{R}{R - A}}{\displaystyle\sum_{i=0}^{R-1} \dfrac{A^i}{i!} + \dfrac{A^R}{R!} \cdot \dfrac{R}{R - A}}.$$

5. The method for modelling traffic according to claim 1, wherein said step of determining a delay of the traffic due
to the sharing of the access link among the different active connections comprises the step of determining of the
delay taking into account the capacity $C$ of the aggregation link, the capacity $r_{peak}$ of the access link, the average
file request arrival time $\lambda$, and/or the average file size $\mu$.

6. The method for modelling traffic according to claims 1 or 5,
wherein said step of determining a delay of the traffic due to the sharing of the access link among the different
active connections comprises the step of determining a mean sojourn time $E_{acsh}\{W(x)\}$ for a given file size x due
to the sharing of the access link among the different active connections.

7. The method for modelling traffic according to claims 5 and 6,
wherein said step of determining a delay of the traffic due to the sharing of the access link among the different
active connections comprises the step of determining a mean sojourn time $E_{acsh}\{W(x)\}$ for a given file size $x$ due
to the sharing of the access link among the different active connections according to

$$E_{acsh}\{W(x)\} = \frac{x}{r_{peak}} + \frac{x}{r_{peak}} \cdot \frac{\rho_{access\ link}}{1 - \rho_{access\ link}}$$

where

$$\rho_{access\ link} = \frac{\lambda\mu}{r_{peak}}.$$

8. The method for modelling traffic according to claims 4 and 7,
   wherein said step determining a combined delay of the traffic comprises the step of determining a total mean sojourn time $E\{T(x)\}|_{PTSC}$ for a given file size x according to

$$E\{T(x)\}|_{PSTC} = \frac{x}{r_{peak}} \cdot f'_R$$

where

$$f'_R = \frac{E_2\left(R, R*\rho_{aggregation\ link}\right)}{R(1-\rho_{aggregation\ link})} + \frac{1}{1-\rho_{access\ link}} \ ;$$

$$\rho_{aggregation\ link} = \frac{N\lambda\mu}{C}\ ; \qquad \rho_{access\ link} = \frac{\lambda\mu}{r_{peak}}\ ; \qquad R = Int\left[\frac{C}{r_{peak}}\right]\ ;$$

and

$$E_2(R,A) = \frac{\dfrac{A^R}{R!}\cdot\dfrac{R}{R-A}}{\displaystyle\sum_{i=0}^{R-1}\dfrac{A^i}{i!}+\dfrac{A^R}{R!}\cdot\dfrac{R}{R-A}}\ .$$

9. The method for modelling traffic according to any of claims 1 to 8,
   including a method for determining a capacity C of an aggregation link for a desired combined delay, said method comprising the steps of:

   modelling traffic including the step of determining the combined delay of the traffic for a given value of the capacity C of the aggregation link;

   changing the value of the capacity C in order to yield the desired combined delay.

10. The method for modelling traffic according to any of claims 1 to 8,
    including a method for determining a number of clients N for a desired combined delay, said method comprising the steps of:

    modelling traffic including the step of determining the combined delay of the traffic for a given value of the number of clients $N$;

    changing the value of the number of clients $N$ in order to yield the desired combined delay.

11. The method for modelling traffic according to any of claims 1 to 8,
    including a method for determining a capacity $r_{peak}$ of an access link for a desired combined delay, said method comprising the steps of:

    modelling traffic including the step of determining the combined delay of the traffic for a given value of the capacity $r_{peak}$ of the access link;

changing the value of the capacity $r_{peak}$ of the access link in order to yield the desired combined delay.

**12.** The method for modelling traffic according to any of claims 1 to 8,
including a method for determining an average throughput of the shared transmission network, said method comprising the steps of:

modelling traffic including the step of determining the combined delay of the traffic;

determining the average throughput of the shared transmission network taking into account the modelled combined delay.

**13.** The method for modelling traffic according to any of claims 1 to 8,
including a method for determining admission control to the shared transmission network, said method comprising the steps of:

modelling traffic comprising an incoming data flow including the step of determining the combined delay of the traffic;

admitting the incoming data flow only if the modelled combined delay is beneath a given threshold.

**14.** The method for modelling traffic according to any of claims 1 to 8,
including a method for determining admission control to the shared transmission network, said method comprising the steps of:

modelling traffic including an incoming data flow including the step of determining the average throughput of the shared transmission network;

admitting the incoming data flow only if the determined average throughput is above a given threshold.

**15.** The method for modelling traffic according to any of claims 1 to 8,
including a method for modelling congestion control in the shared transmission network, said method comprising the steps of:

modelling traffic including the step of determining the combined delay of the traffic;

determining when a link is congested by taking into account the combined delay and the amount of the traffic that should be discarded in order to eliminate congestion taking into account the combined delay.

**16.** The method for modelling traffic according to any of claims 1 to 8,
including a method for modelling load balancing by overlapping models.

**17.** A system for modelling traffic within a shared transmission network, the network comprising an aggregation link for transmitting traffic to a number of access links and an access link for transmitting traffic via different active connections to a client, the access link being connected with the aggregation link, said system comprising:

means for determining a delay of the traffic due to the transmission of the traffic through the aggregation link;
means for determining a delay of the traffic due to the transmission of the traffic through the access link comprising the step of determining a delay of the traffic due to the sharing of the access link among the different active connections; and

means for determining a combined delay of the traffic by combining the delay of the traffic due to the transmission in the aggregation link and the delay of the traffic due to the transmission of the traffic through the access link.

**18.** A program product directly loadable into the internal memory of a digital computer,
comprising software code portions for performing the steps of any of the claims 1 to 16 when said product is run on a computer.

**19.** A computer usable medium storing a program product comprising:

computer readable program means for causing a computer to perform the steps of any of the claims 1 to 16 when said product is run on the computer.

## FIG 1

## FIG 2

## FIG 3

## FIG 4A

Simulation Scenario

TCP Client 1

$r_{peak}$

TCP Client 2

⋮

TCP Client N

IP router

C

TCP Server

## FIG 4B

TCP Model Suite

| Used TCP Model Features |
|---|
| reliability (Acknowledgements + retransmissions), flow control (dynamic window), reordering of data, connection setup and termination (three-way handshake protocol), persistence time-out |

| Implemented Algorithms | • Full implementation of slow-start congestion avoidance and congestion control mechanism<br>• Nagle's algorithm for Silly Window Syndrome avoidance<br>• Karn's algorithm to avoid retransmission ambiguity problem<br>• Fast retransmit and fast recovery<br>• Window scaling<br>• Selective acknowledgment<br>• Increased initial window option |
|---|---|

## FIG 5A

### 5% Access link load
### Mean Sojoum Time

— Opnet Simulation Results
-⁕- M/G/R-PS Model Prediction
-- Extended M/G/R-P Model Prediction

### 15% Access link load
### Mean Sojoum Time

— Opnet Simulation Results
-⁕- M/G/R-PS Model Prediction
-- Extended M/G/R-P Model Prediction

## FIG 5B

40% Access link load
Mean Sojoum Time

— Opnet Simulation Results
-*- M/G/R-PS Model Prediction
-- Extended M/G/R-P Model Prediction

| Scenario | 5% access link load | 15% access link load | 40% access link load |
|---|---|---|---|
| Aggregation link load | 70% | 60% | 70% |
| Aggregation link capacity C [kbps] | 1024 | 3200 | 7296 |
| $R=C/r_{peak}$ | 16 | 50 | 114 |
| Number of users N | 200 | 200 | 200 |

## FIG 6

IP-Network

─┼─ Gi

GGSN

─┼─ Gn

SGSN

SGSN

─┼─ Bb/Iu

BSS/UTRAN

BSS/UTRAN

─┼─ Um/Uu

MS/UE

MS/UE

UTRAN: UMTS Terrestrial Radio
Access Network
UE: User Equipement

## FIG 7

1 | Client

2 | Client

$r_{peak}$

Access link

N | Client

MUX

Main data flow

Aggregation link

C

Server

FIG 8

```
┌─────────────────────────┐
│    Input Parameters     │
├─────────────────────────┤          ← Step 1
│ Initial C, r_peak, λ, μ, N │
│   Delay Requirement     │
└─────────────────────────┘
```

$r_{peak}$, $\lambda$, $\mu$, N

Step 2 →  Novel PS Model        Increment Capacity

Step 3 →  Delay Requirement fullfilled?   No

Yes

The Link Capacity is Dimensioned

FIG 9

```
┌─────────────────────────┐
│    Input Parameters     │
├─────────────────────────┤
│ Initial C, r_peak, λ, μ, N, │  ← Step 1
│      Throughput         │
│      Requirement        │
└─────────────────────────┘
```

$r_{peak}$, $\lambda$, $\mu$, N

Step 2 →  Novel PS Model        Increment Capacity

Step 3 →  Throughput Requirement fullfilled?   No

Yes

The Link Capacity is Dimensioned

## FIG 10

## FIG 11

FIG 12

Step 1

Calculate φ
n=0

Step 2

Flow time-out → Idle ← Packet arrives to the node

Step 3.1

Step 4

•n=n-1,
•remove flow id. from the list

Accept Packet ← Yes ← packet flow id. in the list ?

No

Step 3.2

n=n+1,
• add packet flow id. to the list ← No ← n+1>φ?

Yes

Reject Packet

FIG 13

Congestion control

LAN/WLAN

Congestion control

Internet

Congestion control

UMTS

Congestion control

ATM

AdHoc

FIG 14

Congestion
control

Access
Network $\Sigma$

Aggregation
Link

Internet

Congestion
control

1 Client

2 Client

⋮

N Client

Access
Network $\Sigma$

Aggregation
link

C

Access
link

Main data flow

Internet

FIG 15

Calculate E{T} with
the Processor
Sharing Model

Step 1

Step 2

Idle

Packet arrives to the node

Update Time
Average of
the delay t

Step 3.1

No

t-E{T}>$\tau$?

Step 3.2

Activate
Congestion
Control
Algorithm

Yes

## FIG 16

## FIG 17

FIG 18

# FIG 19

**Input Variables**

- Number of users N
- Access Link Capity $r_{peak}$
- Aggregation Link Capacities $C_1,...,C_M$
- Offered Traffic Loab b

**Load Distribution Algorithm**

**Output Results**

- The average delay $E\{T\}$ for all active flows
- The distribution of the offered loads $b_1,...,b_M$

**Conditions**

- The avegare delay $E\{T\}$ must be the same for all active flows
- $b=\Sigma b_i$

**FIG 20**

EP 1 365 545 A1

Step 1

| Input Parametrs |
| --- |
| Precision ε<br>Step Δ Initial f'R=1<br>Location - left<br>Offered Load b |

Objective: distribute a given affered load b among M-overlapping processor sharing models, so that the delay factor f'R is the same for all of them.

Step 5

f'R=f'R+Δ

if (location==right)
Δ=Δ/2;
end if
location=left

Step 2.1

| Calculate λ1 with algorithm in figure 23 |
| --- |

| Calculate λ2 with algorithm in figure 23 |
| --- |

Step 2.M

...

| Calculate λM with algorithm in figure 23 |
| --- |

f'R=rR-Δ

Step 5

if (location==left)
Δ=Δ/2;
end if
location=right

Step 3

$\Sigma$

Step 4.1

Step 4.1

Yes

$b-\sum_{i=1}^{M} \lambda i \cdot \mu > \varepsilon?$

No

$\sum_{i=1}^{M} \lambda i \cdot \mu - b > \varepsilon?$

Yes

No

Step 6

The offered traffic load b is distributed. The common delay factor is f'R

49

# FIG 21

**Input Parameters**

Step 1

Precision $\delta$
Initial $\lambda i = Ci/(N^*\mu)$
Step $\Delta = \lambda i/2$
Location=right
Delay factor f'R

Objective: calculate $\lambda i$ for a given delay factor f'R. With $\lambda i$ the offered load $bi = \mu * \lambda i$ is obtained.

$\lambda i = \lambda i + \Delta$

Step 5

Calculate the delay factor f'RC with equation 20

Step 2

$\lambda i = \lambda i - \Delta$

Step 5

if (location==right)
$\Delta = \Delta/2$;
end if
location=left

if (location==left)
$\Delta = \Delta/2$;
end if
location=right

Step 3.1

Step 3.2

Yes  f'R-f'R>$\delta$?  No  f'RC-f'R>$\delta$?  Yes

No

Step 6

The parameter $\lambda i$ is calculated

# FIG 22

Step 1 → M-flow lists
∀i∈ {1,...M},
• Calculate φi
• ni=0

Step 2

Flow in list i times-out — Idle — Packet arrives to the node — Step 3.1

Step 4

• ni=ni-1,
• remove flow id. from the list i

Accept Packet ← Yes ← packet flow id. in one of the the M-lists?

Step 3.2 → No

Find the less loaded link

Step 3.3

• ni=ni+1
• add packet flow id. to the list i ← No — Are all links full?

Yes

Reject Packet

# FIG 23

EP 1 365 545 A1

## FIG 24

## FIG 25

FIG 26

```
┌─────────────────────────┐
│  Input Parameter Set    │
│  of the Current Traffic │
│        Class            │
├─────────────────────────┤
│ Initial C, r_peak, λ, μ, N, │
│   Delay Requirement     │
└─────────────────────────┘
```

```
┌──────────┐   ┌────────────┐   ┌────────────┐
│ Next     │   │ Novel PS   │   │ Increment  │
│ Traffic  │   │ Model      │   │ Capacity   │
│ Class    │   │            │   │            │
└──────────┘   └────────────┘   └────────────┘
```

FIG 26

Input Parameter Set of the Current Traffic Class

Initial $C$, $r_{peak}$, $\lambda$, $\mu$, $N$, Delay Requirement

Next Traffic Class

Novel PS Model

Increment Capacity

Delay Requirement fullfilled?

No

Yes

The Link Capacity $C_i$ for the Traffic Class i is Dimensioned

No

Last Traffic Class?

Yes

$$C = \sum_i C_i$$

The Link Capacity C is Dimensioned

## FIG 27

FIG 28

**European Patent Office**

## PARTIAL EUROPEAN SEARCH REPORT

which under Rule 45 of the European Patent Convention shall be considered, for the purposes of subsequent proceedings, as the European search report

Application Number

EP 02 01 1456

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 230 200 B1 (FORECAST JOHN ET AL) 8 May 2001 (2001-05-08) * column 7, line 47 – column 8, line 5 * * column 12, line 58 – column 18, line 60 * * column 57, line 3 – line 22 * --- | 13,14, 16,18,19 | H04L12/56 H04L12/24 |
| X | WO 02 03628 A (NOKIA INC) 10 January 2002 (2002-01-10) * abstract; figure 1 * --- -/-- | 13,14, 18,19 | |

**TECHNICAL FIELDS SEARCHED (Int.Cl.7)**

H04L

### INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

13-16, 18, 19

Claims searched incompletely :

Claims not searched :

1-12, 17

Reason for the limitation of the search:

Article 52 (2)(a) EPC - Mathematical method

| Place of search | Date of completion of the search | Examiner |
|---|---|---|
| MUNICH | 13 August 2002 | Köppl, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C07)

EP 1 365 545 A1

**European Patent Office**

## PARTIAL EUROPEAN SEARCH REPORT

Application Number

EP 02 01 1456

| | DOCUMENTS CONSIDERED TO BE RELEVANT | | CLASSIFICATION OF THE APPLICATION (Int.Cl.7) |
|---|---|---|---|
| Category | Citation of document with indication, where appropriate, of relevant passages | Relevant to claim | |
| X | PITSILLIDES A ET AL: "Adaptive congestion control in ATM based networks: quality of service and high utilisation" COMPUTER COMMUNICATIONS, ELSEVIER SCIENCE PUBLISHERS BV, AMSTERDAM, NL, vol. 20, no. 14, 1 December 1997 (1997-12-01), pages 1239-1258, XP004103079 ISSN: 0140-3664 From section 1 "Introduction", paragraph starting with "Our work differs ..." to end of section 3 "Problem formulation and solution" * page 1240, right-hand column - page 1246, right-hand column * --- | 15,18,19 | |
| A | OUBAGHA E ET AL: "Delay analysis of a credit based control for ABR transfer" IEEE ATM WORKSHOP 1997. PROCEEDINGS LISBOA, PORTUGAL 25-28 MAY 1997, NEW YORK, NY, USA,IEEE, US, 25 May 1997 (1997-05-25), pages 437-444, XP010247429 ISBN: 0-7803-4196-1 Section 3 "The reference model" * page 438 - page 439 * --- -/-- | 13-16, 18,19 | TECHNICAL FIELDS SEARCHED (Int.Cl.7) |

EPO FORM 1503 03.82 (P04C10)

58

**European Patent Office**

**PARTIAL EUROPEAN SEARCH REPORT**

Application Number

EP 02 01 1456

| | DOCUMENTS CONSIDERED TO BE RELEVANT | | CLASSIFICATION OF THE APPLICATION (Int.Cl.7) |
|---|---|---|---|
| Category | Citation of document with indication, where appropriate, of relevant passages | Relevant to claim | |
| A,D | LINDBERGER K: "BALANCING QUALITY OF SERVICE, PRICING AND UTILISATION IN MULTISERVICE NETWORKS WITH STREAM AND ELASTIC TRAFFIC" PROCEEDINGS OF THE INTERNATIONAL TELETRAFFIC CONGRESS. ITC-16. TELETRAFFIC ENGINEERING IN A COMPETITIVE WORLD. EDINBURGH, UK, JUNE 7 - 11, 1999, TELETRAFFIC SCIENCE AND ENGINEERING, AMSTERDAM: ELSEVIER, NL, vol. 3B, 7 June 1999 (1999-06-07), pages 1127-1136, XP000878145 ISBN: 0-444-50268-8 * the whole document * ----- | 13-16, 18,19 | TECHNICAL FIELDS SEARCHED (Int.Cl.7) |

EPO FORM 1503 03.82 (P04C10)

## ANNEX TO THE EUROPEAN SEARCH REPORT
## ON EUROPEAN PATENT APPLICATION NO.

EP 02 01 1456

This annex lists the patent family members relating to the patent documents cited in the above-mentioned European search report.
The members are as contained in the European Patent Office EDP file on
The European Patent Office is in no way liable for these particulars which are merely given for the purpose of information.

13-08-2002

| Patent document cited in search report | | Publication date | Patent family member(s) | | Publication date |
|---|---|---|---|---|---|
| US 6230200 | B1 | 08-05-2001 | NONE | | |
| WO 0203628 | A | 10-01-2002 | AU | 6869501 A | 14-01-2002 |
| | | | WO | 0203628 A2 | 10-01-2002 |